# EUROPEAN PATENT APPLICATION

(11) **EP 4 799 798 A1**
(43) Date of publication of application: **02.09.2026**
(21) Application number: 25217612.8
(22) Date of filing: 21.11.2025
(51) Int. Cl.: B29C 65/18, B29C 65/30

(54) **PORTABLE CONDUCTION WELDING APPARATUS, SYSTEM, AND METHOD FOR CONDUCTION WELDING OF THERMOPLASTIC COMPOSITE PARTS**

(30) Priority: 26.02.2025 US 202519064663
(71) Applicant: The Boeing Company, Arlington, VA 22202 (US)
(72) Inventor: WERNTGES, Paul G., Arlington (US); RAINES, David M., Arlington (US); O'CONNELL, Kelly C., Arlington (US); ARNOLD, Alice R., Arlington (US); DOUTHIT, Tyler R., Arlington (US); HARTLEY, Meredith A., Arlington (US); AUTRY, Byron J., Arlington (US)
(74) Representative: St Clair Jones, Gregory Arthur Langley

(57) **Abstract**

There is provided a portable conduction welding apparatus for conduction welding of thermoplastic composite parts. The welding apparatus includes a support frame assembly, an air pressure assembly, a heating system, and controller(s) having power supply(ies). The air pressure assembly includes a linear pneumatic actuator assembly, a directional air valve assembly, and an air regulator assembly. The heating system includes a first heater assembly with first machined insulation plates, a first machined heater block, first heater element(s), and first thermocouple(s). The second heater assembly includes second machined insulation plates, a second machined heater block, a dovetail connector plate, an air cylinder isolator plate, second heater element(s), and second thermocouple(s). The welding apparatus welds together at a weldline, a first thermoplastic composite part aligned to the first heater assembly and a second thermoplastic composite part aligned to the second heater assembly, by applying force, and conducting heat during a thermal welding cycle.

## Description

### FIELD

The present disclosure relates generally to conduction welding apparatuses, systems, and methods, and more particularly, to portable conduction welding apparatuses, systems, and methods for conduction welding of thermoplastic composite parts, such as an aircraft thermoplastic composite parts.

### BACKGROUND

The joining of thermoplastic composite parts by welding, such as thermoplastic welding, is increasingly used in the manufacture and repair of thermoplastic composite parts for aircraft, spacecraft, rotorcraft, automobiles, watercraft, and other vehicles and structures, to reduce weight and cost of assembled parts from mechanical fastening procedures, and to reduce processing times from adhesive bonding procedures. In addition, unlike thermoset composites that require complex polymer crosslinking reactions and long cure times in an autoclave, oven, or press, thermoplastic composites can be melted and remelted to fuse polymers together without such complex polymer crosslinking reactions and long cure times.

The thermoplastic welding of two thermoplastic composite parts is carried out by melting and fusing thermoplastic composite material at contact interfaces of the two thermoplastic composite parts, typically referred to as a weldline or bondline, with application of heat and pressure, followed by cooling. Known thermoplastic welding techniques may typically include induction welding, ultrasonic welding, laser welding, resistance welding, and conduction welding. However, known thermoplastic welding techniques typically involve the use of robotics and large equipment that require digital controls and software programming to pre-plan a pathway of a robot and/or a pathway of the equipment, such as a jig.

For example, one known thermoplastic welding system and process includes induction welding that uses electromagnetic induction to heat the thermoplastic composite parts by moving an induction coil along the weldline or bondline, and that uses a floor-mounted robot with an end effector that must travel along a pre-determined path along a weldline or bondline of the thermoplastic composite parts using a pre-determined speed, distance, and induction current intensity. However, such known thermoplastic welding system and process is not portable, may not have usability on multiple thermoplastic composite part configurations, is expensive, and is complex to program and control.

Another known thermoplastic welding system and process includes conduction welding that uses large heated platens mounted to robots to conduct heat through the thermoplastic composite parts to be joined. However, such known thermoplastic welding process is not portable, may not have usability on multiple thermoplastic composite part configurations, and is expensive.

Accordingly, there is a need in the art for an improved thermoplastic welding apparatus, system, and method, such as a conduction welding apparatus, system, and method for conduction welding of thermoplastic composite parts that is portable for transport to, and use at, multiple locations, including a manufacturing facility and on an aircraft or on other vehicles, that is usable on multiple thermoplastic composite part configurations, that is simple to use and does not require complex digital controls and software programming and robotics to pre-plan the pathway of a robot or large equipment, that does not require special facility modifications, such as power or air supplies, to use, that is easy to carry, is handheld, and is lightweight, that is less expensive than robotics and large equipment, such as jigs and large heated platens, that is adaptable, that does not require indexing or aligning of heater assemblies with indexing pins, that rigidly attaches machined insulation plates to machined heater blocks, and that provide advantages over known systems and methods.

### SUMMARY

Example implementations of the present disclosure provide for an improved portable conduction welding apparatus, system, and method for conduction welding of thermoplastic composite parts. As discussed in the below detailed description, versions of the improved portable conduction welding apparatus, system, and method may provide significant advantages over known apparatuses, systems, and methods.

In a version of the disclosure, there is provided a portable conduction welding apparatus for conduction welding of thermoplastic composite parts. The portable conduction welding apparatus comprises a support frame assembly having a lower portion and an upper portion. The portable conduction welding apparatus further comprises an air pressure assembly configured to apply a force during the conduction welding. The air pressure assembly comprises a linear pneumatic actuator assembly coupled to the upper portion of the support frame assembly, a directional air valve assembly, and an air regulator assembly.

The portable conduction welding apparatus further comprises a heating system. The heating system comprises a first heater assembly coupled to the lower portion of the support frame assembly. The first heater assembly comprises a plurality of first machined insulation plates, a first machined heater block attached to the plurality of first machined insulation plates, one or more first heater elements coupled to the first machined heater block, and one or more first thermocouples coupled to the first machined heater block.

The heating system further comprises a second heater assembly positioned opposite the first heater assembly, and coupled to the linear pneumatic actuator assembly. The second heater assembly comprises a plurality of second machined insulation plates, a second machined heater block attached to the plurality of second machined insulation plates, a dovetail connector plate attached to one or more of the plurality of second machined insulation plates, an air cylinder isolator plate coupled to the dovetail connector plate, one or more second heater elements coupled to the second machined heater block, and one or more second thermocouples coupled to the second machined heater block.

The portable conduction welding apparatus further comprises one or more controllers having one or more power supplies, to control and to power the portable conduction welding apparatus.

The portable conduction welding apparatus is portable and is configured to weld together at a weldline, a first thermoplastic composite part aligned to the first heater assembly and a second thermoplastic composite part aligned to the second heater assembly, by applying the force from the air pressure assembly on the weldline, and conducting heat from the one or more first heater elements and the one or more second heater elements at the weldline during a thermal welding cycle of the conduction welding, to melt thermoplastic composite material of the first thermoplastic composite part and the second thermoplastic composite part at the weldline, to obtain welded thermoplastic composite parts.

In another version of the disclosure, there is provided a portable conduction welding system for conduction welding of thermoplastic composite parts. The portable conduction welding system comprises a portable conduction welding apparatus for the conduction welding of the thermoplastic composite parts. The portable conduction welding apparatus comprises a support frame assembly having a lower portion and an upper portion.

The portable conduction welding apparatus further comprises an air pressure assembly configured to apply a force during the conduction welding. The air pressure assembly comprises a linear pneumatic actuator assembly coupled to the upper portion of the support frame assembly, a directional air valve assembly, an air regulator assembly, and a plurality of air connection hoses.

The portable conduction welding apparatus further comprises a heating system. The heating system comprises a first heater assembly coupled to the lower portion of the support frame assembly. The first heater assembly comprises a plurality of first machined insulation plates, a first machined heater block attached to the plurality of first machined insulation plates, one or more first heater elements coupled to the first machined heater block, and one or more first thermocouples coupled to the first machined heater block.

The heating system further comprises a second heater assembly positioned opposite the first heater assembly, and coupled to the linear pneumatic actuator assembly. The second heater assembly comprises a plurality of second machined insulation plates, a second machined heater block attached to the plurality of second machined insulation plates, a dovetail connector plate attached to one or more of the plurality of second machined insulation plates, a silicone pressure pad coupled to the dovetail connector plate, an air cylinder isolator plate coupled to the silicone pressure pad, one or more second heater elements coupled to the second machined heater block; and one or more second thermocouples coupled to the second machined heater block.

The portable conduction welding apparatus further comprises one or more controllers having one or more power supplies, to control and to power the portable conduction welding apparatus. The portable conduction welding apparatus further comprises a carrying case configured to secure and to transport the portable conduction welding apparatus.

The portable conduction welding apparatus is portable and is configured to weld together at a weldline, a first thermoplastic composite part aligned to the first heater assembly and a second thermoplastic composite part aligned to the second heater assembly, by applying the force from the air pressure assembly on the weldline, and conducting heat from the one or more first heater elements and the one or more second heater elements at the weldline during a thermal welding cycle of the conduction welding, to melt thermoplastic composite material of the first thermoplastic composite part and the second thermoplastic composite part at the weldline, to obtain welded thermoplastic composite parts.

In another version of the disclosure, there is provided a method of using a portable conduction welding apparatus for conduction welding of thermoplastic composite parts. The method comprises providing the portable conduction welding apparatus. The portable conduction welding apparatus comprises a support frame assembly having a lower portion and an upper portion.

The portable conduction welding apparatus further comprises an air pressure assembly configured to apply a force during the conduction welding. The air pressure assembly comprises a linear pneumatic actuator assembly coupled to the upper portion of the support frame assembly, a directional air valve assembly, and an air regulator assembly.

The portable conduction welding apparatus further comprises a heating system comprising a first heater assembly coupled to the lower portion of the support frame assembly. The first heater assembly comprises a plurality of first machined insulation plates, a first machined heater block attached to the plurality of first machined insulation plates, one or more first heater elements coupled to the first machined heater block, and one or more first thermocouples coupled to the first machined heater block.

The heating system further comprises a second heater assembly positioned opposite the first heater assembly, and coupled to the linear pneumatic actuator assembly. The second heater assembly comprises a plurality of second machined insulation plates, a second machined heater block attached to the plurality of second machined insulation plates, a dovetail connector plate attached to one or more of the plurality of second machined insulation plates, a silicone pressure pad coupled to the dovetail connector plate, an air cylinder isolator plate coupled to the silicone pressure pad, one or more second heater elements coupled to the second machined heater block, and one or more second thermocouples coupled to the second machined heater block.

The portable conduction welding apparatus further comprises one or more controllers having one or more power supplies, to control and to power the portable conduction welding apparatus.

The method further comprises aligning a first thermoplastic composite part to the first heater assembly. The method further comprises aligning a second thermoplastic composite part to the second heater assembly. The method further comprises supplying air from an air supply to the air pressure assembly.

The method further comprises applying the force, by the linear pneumatic actuator assembly of the air pressure assembly, on a weldline comprising contact interfaces of the first thermoplastic composite part and the second thermoplastic composite part. The method further comprises activating the one or more first heater elements of the first heater assembly, and activating the one or more second heater elements of the second heater assembly.

The method further comprises running a thermal welding cycle, and applying heat from the one or more first heater elements of the first heater assembly and the one or more second heater elements of the second heater assembly, at the weldline, to melt thermoplastic composite material of the first thermoplastic composite part and the second thermoplastic composite part together at the weldline, to obtain welded thermoplastic composite parts.

The method further comprises cooling the welded thermoplastic composite parts. The method further comprises removing the air from the air pressure assembly, to relieve a pressure and to relieve the force from the weldline. The method further comprises removing the welded thermoplastic composite parts that are cooled from the portable conduction welding apparatus.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or claims.
FIG. 1 is an illustration of a block diagram of an exemplary version of a portable conduction welding apparatus and an exemplary version of a portable conduction welding system that includes the portable conduction welding apparatus of the disclosure;
FIG. 2A is an illustration of a right side back perspective view of an exemplary version of a portable conduction welding apparatus of the disclosure;
FIG. 2B is an illustration of a right side front perspective view of the portable conduction welding apparatus of FIG. 2A;
FIG. 2C is an illustration of a left side view of the portable conduction welding apparatus of FIG. 2A, where a controller, a power supply, connector elements, an air supply, and an air hose line of FIG. 2A are removed;
FIG. 2D is an illustration of a right side view of the portable conduction welding apparatus of FIG. 2C;
FIG. 2E is an illustration of a front view of the portable conduction welding apparatus of FIG. 2C;
FIG. 2F is an illustration of a cross-sectional left side view of the portable conduction welding apparatus taken along lines 2F-2F of FIG. 2E, with thermoplastic composite parts added;
FIG. 2G is an illustration of a right side perspective view of the portable conduction welding apparatus of FIG. 2C, where a lower heater assembly, and upper machined insulation plates attached to an upper machined heater block are removed;
FIG. 3 is an illustration of a front perspective view of an exemplary version of an upper heater assembly of the portable conduction welding apparatus of FIG. 2A;
FIG. 4A is an illustration of a front perspective view of a plurality of upper machined insulation plates attached to an upper machined heater block of the upper heater assembly of FIG. 3;
FIG. 4B is an illustration of a front perspective view of the upper machined heater block of FIG. 4A;
FIG. 5A is an illustration of a right side front perspective view of a lower heater assembly of the portable conduction welding apparatus of FIG. 2A;
FIG. 5B is an illustration of a front perspective view a machined lower heater block of the lower heater assembly of FIG. 5A;
FIG. 6 is an illustration of a right side perspective view of an exemplary version of a support frame assembly of the portable conduction welding apparatus of FIG. 2A;
FIG. 7A is an illustration of a right side perspective view of an exemplary air pressure assembly of an exemplary version of a portable conduction welding apparatus of the disclosure;
FIG. 7B is an illustration of a back perspective view of an exemplary air regulator assembly of the air pressure assembly of FIG. 7A;
FIG. 7C is an illustration of a right side perspective view of an exemplary directional air valve assembly of the air pressure assembly of FIG. 7A;
FIG. 7D is an illustration of a front perspective view of an exemplary linear pneumatic actuator assembly of the air pressure assembly of FIG. 7A;
FIG. 7E is an illustration of a front perspective view of an exemplary air flow port of the linear pneumatic actuator assembly of FIG. 7A;
FIG. 8 is an illustration of a front perspective view of an exemplary version of a portable conduction welding system of the disclosure, showing an exemplary version of a portable conduction welding apparatus packed in an exemplary version of a carrying case;
FIG. 9A is an illustration of a perspective view of an exemplary version of two welded thermoplastic composite parts welded together using an exemplary version of a portable conduction welding apparatus and method of the disclosure;
FIG. 9B is an illustration of a perspective view of another exemplary version of two welded thermoplastic composite parts welded together using an exemplary version of a portable conduction welding apparatus and method of the disclosure;
FIG. 10 is an illustration of a flow diagram of an exemplary version of a method of the disclosure;
FIG. 11 is an illustration of a perspective view of an aircraft that incorporates thermoplastic composite aircraft parts that can be welded using an exemplary version of a portable conduction welding apparatus and method of the disclosure;
FIG. 12 is an illustration of a flow diagram of an exemplary aircraft manufacturing and service method; and
FIG. 13 is an illustration of an exemplary block diagram of an aircraft.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version". The instances of the phrases "one version" or "a version" do not necessarily refer to the same version. Particular features, structures, or characteristics may be combined in any suitable manner consistent with this disclosure. All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, the terms "first", "second", etc., are used as labels for nouns that they precede, and do not imply any type of ordering (e.g., spatial, temporal, logical, etc.).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

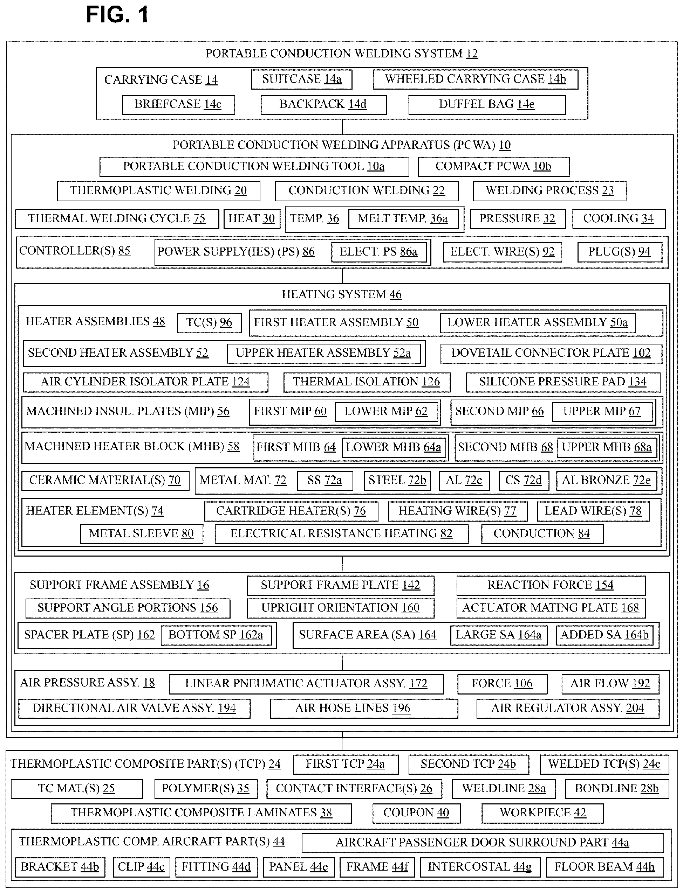

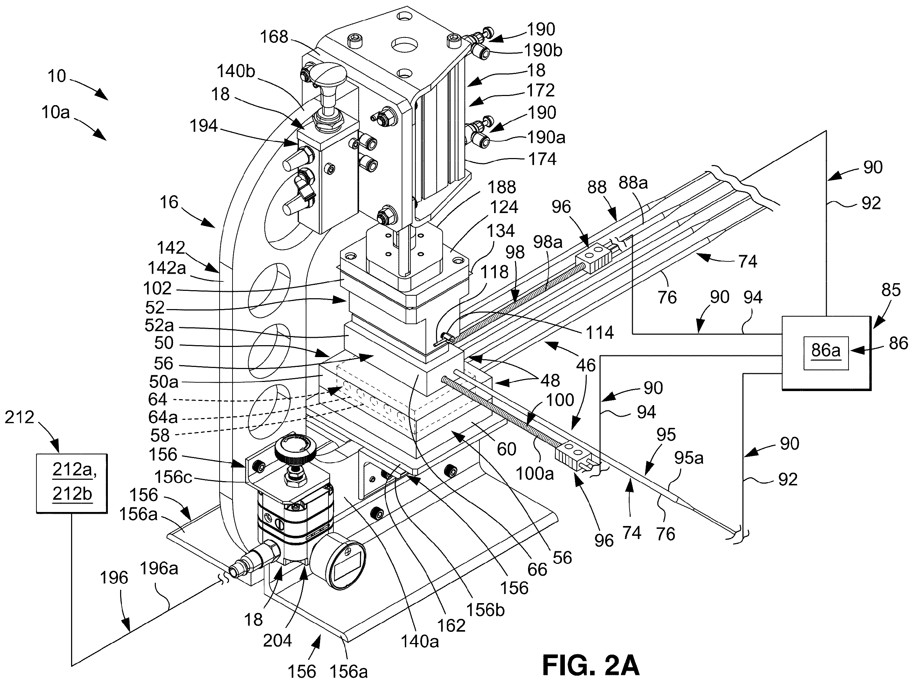

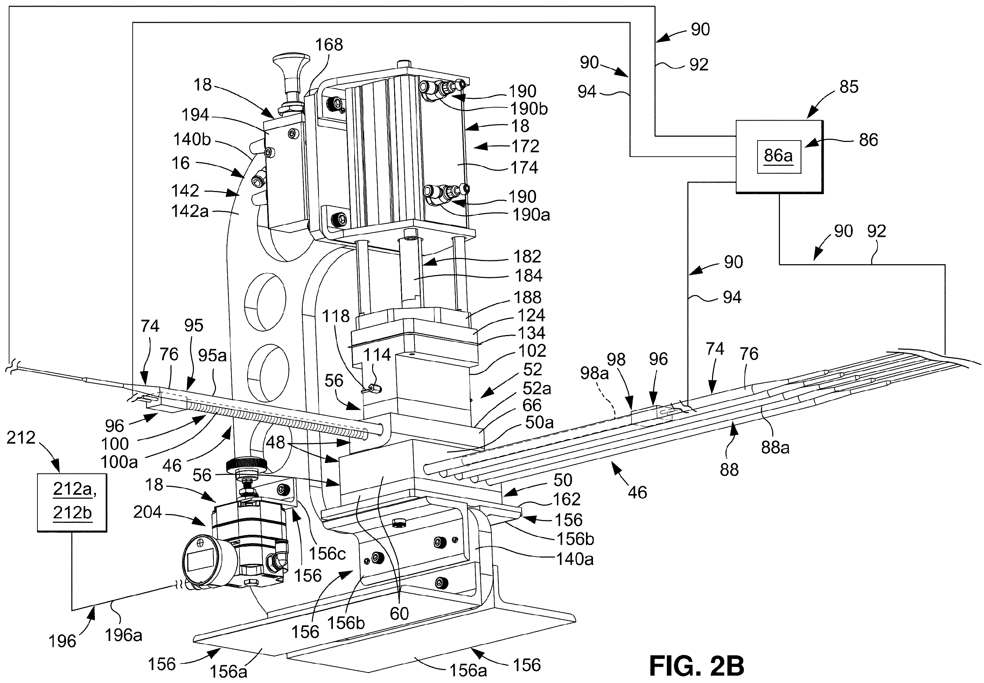

FIG. 1 is an illustration of a block diagram of an exemplary version of a portable conduction welding apparatus (PCWA) 10, such as a portable conduction welding tool 10a, of the disclosure, and an exemplary version of a portable conduction welding system 12 of the disclosure. FIG. 2A is an illustration of a right side back perspective view of an exemplary version of the portable conduction welding apparatus 10, such as the portable conduction welding tool 10a, of the disclosure. FIG. 2B is an illustration of a right side front perspective view of the portable conduction welding apparatus 10, such as the portable conduction welding tool 10a, of FIG. 2A.

The blocks in FIG. 1 represent elements, and lines connecting the various blocks do not imply any particular dependency of the elements. Furthermore, the connecting lines shown in the various Figures contained herein are intended to represent example functional relationships and/or physical couplings between the various elements, but it is noted that other alternative or additional functional relationships or physical connections may be present in versions disclosed herein. One or more of these blocks may be combined, divided, or combined and divided into different blocks when implemented in an illustrative example. Further, the illustrations of the portable conduction welding apparatus 10 and the portable conduction welding system 12 in FIG. 1 are not meant to imply physical or architectural limitations to the manner in which an illustrative example may be implemented. Other components in addition to, or in place of, the ones illustrated may be used. Some components may be unnecessary.

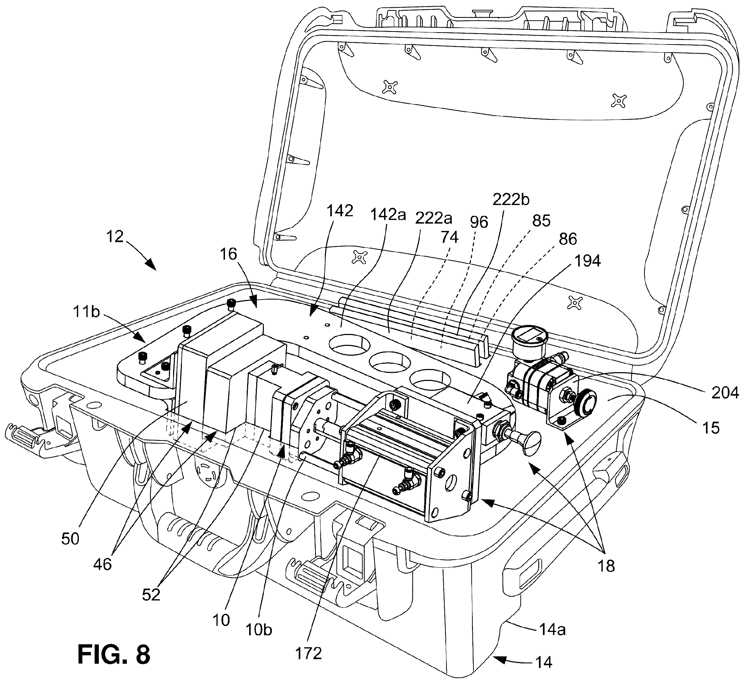

As shown in FIG. 1, in one version, the portable conduction welding system 12 comprises the portable conduction welding apparatus (PCWA) 10 (see also FIGS. 2A-2B), such as the portable conduction welding tool 10a (see also FIGS. 2A-2B). As further shown in FIG. 1, in one version, the portable conduction welding system 12 comprises a carrying case 14 (see also FIG. 8) configured to hold, secure, and transport the portable conduction welding apparatus 10. Preferably, the portable conduction welding apparatus 10 is a compact portable conduction welding apparatus (PCWA) 10b (see FIGS. 1, 8) designed to be handheld, secured, and transported in the carrying case 14 to one or more locations. As shown in FIG. 1, the carrying case 14 may comprise a suitcase 14a (see also FIG. 8), a wheeled carrying case 14b, a briefcase 14c, a backpack 14d, a duffel bag 14e, or another suitable carrying case 14, or another suitable transporting device or means.

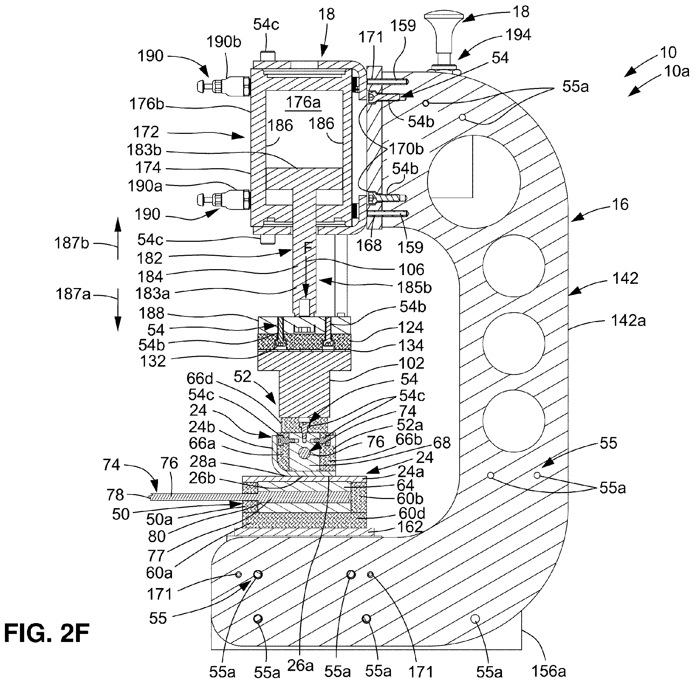

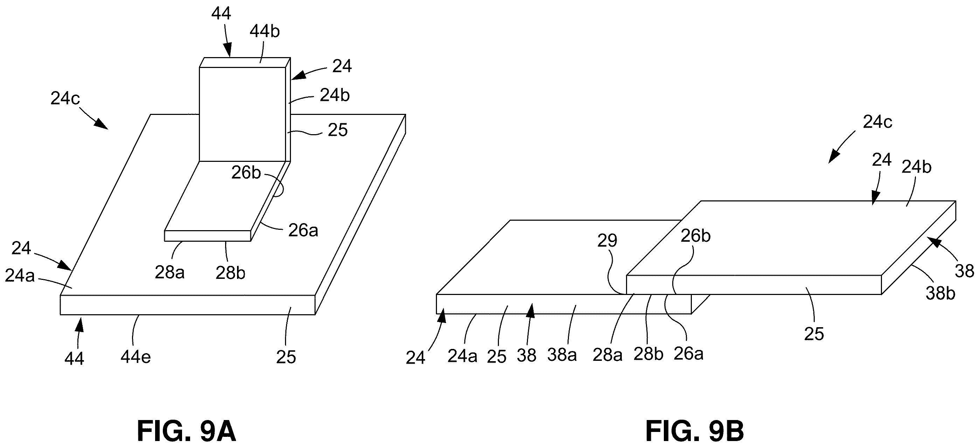

As shown in FIG. 1, the portable conduction welding apparatus 10 is used to perform thermoplastic welding 20, such as conduction welding 22, in a welding process 23, to weld together thermoplastic composite parts (TCP(S)) 24 (see also FIG. 2F), for example, two (2) thermoplastic composite parts 24, such as a first thermoplastic composite part (TCP) 24a (see also FIG. 2F), and a second thermoplastic composite part (TCP) 24b (see also FIG. 2F). The thermoplastic welding 20, such as the conduction welding 22, of the thermoplastic composite parts 24, such as the two (2) thermoplastic composite parts 24, is carried out by using the portable conduction welding apparatus 10 to heat up, to melt, and to fuse together thermoplastic composite material (TC MAT.) 25 (see FIG. 1), or thermoplastic composite materials (TC MAT.(S)) 25 (see FIG. 1), at contact interfaces 26 (see FIGS. 1, 9A-9B) of the thermoplastic composite parts 24, referred to as a weldline 28a (see FIGS. 1, 2F, 9A-9B), or a bondline 28b (see FIG. 1), with application of heat 30 (see FIG. 1) and pressure 32 (see FIG. 1), followed by cooling 34 (see FIG. 1).

The contact interfaces 26 may comprise a first contact interface 26a (see FIGS. 2F, 9A-9B) of the first thermoplastic composite part 24a (see FIGS. 2F, 9A-9B) and a second contact interface 26b (see FIGS. 2F, 9A-9B) of the second thermoplastic composite part 24b (see FIGS. 2F, 9A-9B). The contact interfaces 26 are portions of the first thermoplastic composite part 24a and the second thermoplastic composite part 24b in contact with each other during the thermoplastic welding 20, such as the conduction welding 22.

The thermoplastic welding 20, such as the conduction welding 22, heats polymers 35 (see FIG. 1) of the thermoplastic composite material 25 or thermoplastic composite materials 25, of the thermoplastic composite parts 24, to a temperature (TEMP.) 36 (see FIG. 1), such as a melt temperature (TEMP.) 36a (see FIG. 1), or to their respective melt temperatures 36a, to melt and to fuse the polymers 35 at the weldline 28a, or bondline 28b, so that the two (2) thermoplastic composite parts 24, such as the first thermoplastic composite part 24a and the second thermoplastic composite part 24b, are in intimate contact with each other, to form and to obtain welded thermoplastic composite parts (TCP(S)) 24c (see FIG. 1).

The welded thermoplastic composite parts 24c are then cooled. Preferably, the welded thermoplastic composite parts 24c are cooled with a controlled cooling process at a sufficient cooling temperature range and a sufficient cooling temperature rate, to obtain acceptable crystallization of the polymers 35. Once the welded thermoplastic composite parts 24c are sufficiently cooled, the welded thermoplastic composite parts 24c are removed from the portable conduction welding apparatus 10 for further manufacture, assembly, repair, or other suitable uses. After removing the welded thermoplastic composite parts 24c that are cooled from the portable conduction welding apparatus 10, the portable conduction welding apparatus 10 may be used to weld other thermoplastic composite parts 24 at that location, or the portable conduction welding apparatus 10 may be secured within the carrying case 14, or another suitable transport apparatus or transport means, and transported within the carrying case 14, or another suitable transport apparatus or transport means, to another location to perform thermoplastic welding 20, such as conduction welding 22, of other thermoplastic composite parts 24.

As shown in FIG. 1, the thermoplastic composite parts 24, such as the first thermoplastic composite part 24a and the second thermoplastic composite part 24b, may each comprise one or more of, one or more thermoplastic composite laminates 38, a coupon 40, a workpiece 42, one or more thermoplastic composite (COMP.) aircraft parts 44, or thermoplastic composite aircraft components, or another suitable thermoplastic composite part 24. As shown in FIG. 1, each thermoplastic composite aircraft part 44 may comprise an aircraft passenger door surround part 44a, a bracket 44b, a clip 44c, a fitting 44d, a panel 44e, a frame 44f, an intercostal 44g, a floor beam 44h, or another suitable thermoplastic composite aircraft part 44. Examples may include welding a fitting 44d, such as a pad up fitting, to a floor beam 44h, in order to stiffen the floor beam 44h in a particular area, or welding a bracket 44b to an intercostal 44g, or other suitable welding of two (2) thermoplastic composite parts 24. The thermoplastic composite parts 24 may also comprise brackets, clips, fittings, frames, beams, and other parts or components to be welded together and used in spacecraft, rotorcraft, automobiles, watercraft, and other vehicles and structures.

The thermoplastic composite material 25, or thermoplastic composite materials 25, comprising each of the thermoplastic composite parts 24 may comprise thermoplastic polymer prepreg, polyphenylene sulfide (PPS), polyetherimide (PEI), polyether ketone ketone (PEKK), polyether ether ketone (PEEK), nylon, or other suitable thermoplastic composite materials 25. The thermoplastic composite material 25, or thermoplastic composite materials 25, may include reinforced thermoplastic composite laminates, unidirectional tapes, pre-impregnated fabrics that use either carbon or glass as the primary reinforcement, fiber reinforced plastic, pre-impregnated carbon fiber fabrics, or another suitable polymer matrix thermoplastic composite material.

As shown in FIG. 1, 2A-2B, the portable conduction welding apparatus 10 comprises a heating system 46 having a plurality of heater assemblies 48. In one version, as shown in FIGS. 1, 2A-2B, the plurality of heater assemblies 48 of the heating system 46 comprise a first heater assembly 50, such as a lower heater assembly 50a, or a bottom heater assembly, and a second heater assembly 52, such as an upper heater assembly 52a, or a top heater assembly. As shown in FIGS. 2A-2B, the second heater assembly 52, such as the upper heater assembly 52a, is positioned opposite the first heater assembly 50, such as the lower heater assembly 50a. As shown in FIGS. 2A-2B, the first heater assembly 50, such as the lower heater assembly 50a, is separate from the second heater assembly 52, such as the upper heater assembly 52a. The first heater assembly 50 (see FIGS. 1, 2A-2B), such as the lower heater assembly 50a (see FIGS. 1, 2A-2B), is coupled, or attached, to a lower portion 140a (see FIG. 2A) of a support frame assembly 16 (see FIGS. 1, 2A-2B). The second heater assembly 52, such as the upper heater assembly 52a, is coupled, or attached, to a linear pneumatic actuator assembly 172 (see FIGS. 1, 2A-2B).

The first thermoplastic composite part 24a (see FIG. 2F) may be aligned to the first heater assembly 50, such as the lower heater assembly 50a, with one or more tabs (not shown), one or more visual features (not shown), or other suitable visual devices or mechanisms, coupled either to the first heater assembly 50 or to the first thermoplastic composite part 24a. Similarly, the second thermoplastic composite part 24b (see FIG. 2F) may be aligned to the second heater assembly 52, such as the upper heater assembly 52a, with one or more tabs (not shown), one or more visual features (not shown), or other suitable visual devices or mechanisms, coupled either to the second heater assembly 52 or to the second thermoplastic composite part 24b.

As shown in FIGS. 1, 2A-2B, each of the first heater assembly 50 and the second heater assembly 52 of the plurality of heater assemblies 48 comprises machined insulation (INSUL.) plates (MIP) 56 rigidly attached to, and surrounding, machined heater blocks (MHB) 58 (see FIG. 2A).

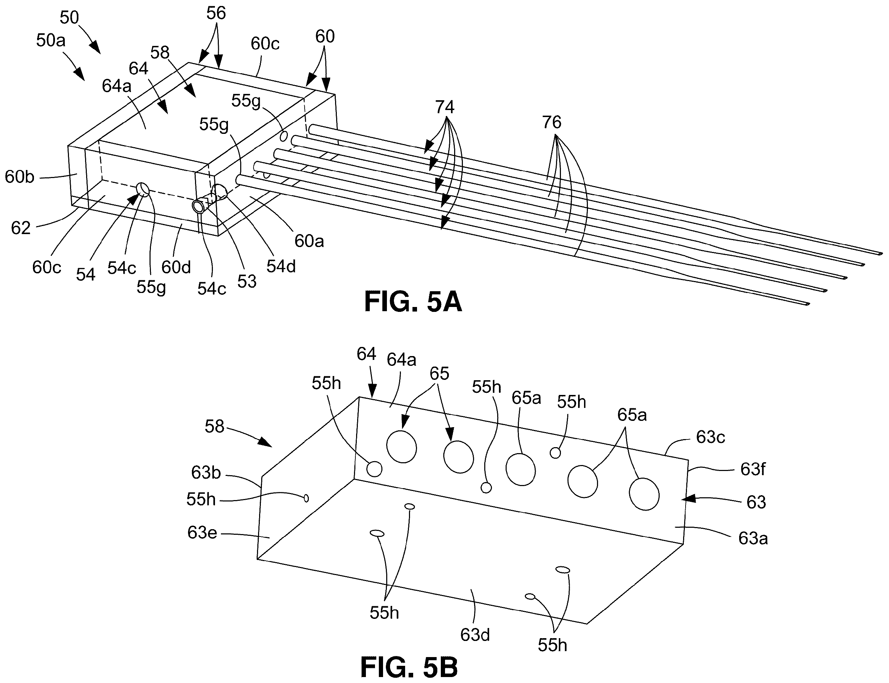

The first heater assembly 50, such as the lower heater assembly 50a, or bottom heater assembly, comprises the plurality of machined insulation plates 56, such as a plurality of first machined insulation plates (MIP) 60 (see FIGS. 1, 2A-2B), for example, lower machined insulation plates (MIP) 62 (see FIG. 1), or bottom machined insulation plates. As shown in FIG. 5A, the first machined insulation plates 60 comprise a first machined front insulation plate 60a, a first machined back insulation plate 60b, two (2) first machined end insulation plates 60c, and a first machined bottom insulation plate 60d. FIG. 5A shows five (5) first machined insulation plates 60. However, more than five (5) first machined insulation plates 60 may be used. The first heater assembly 50, such as the lower heater assembly 50a, further comprises the machined heater block 58, such as a first machined heater block (MHB) 64 (see FIGS. 1, 2A), for example, a lower machined heater block (MHB) 64a (see FIGS. 1, 2A), or bottom machined heater block, attached to the plurality of first machined insulation plates 60.

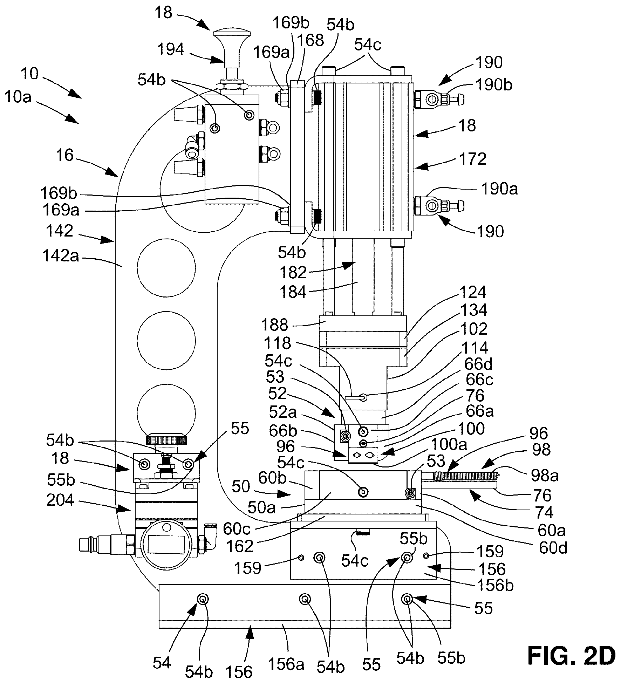

The first machined insulation plates 60 insulate heat 30 (see FIG. 1) from the first machined heater block 64, and protect from inadvertent touching by a user of the first machined heater block 64 when it is heated or hot. The first machined insulation plates 60 are attached to the first machined heater block 64 with attachment elements 54 (see FIGS. 2D, 5A), such as shoulder screws 54c (see FIGS. 2D, 5A), or other suitable attachment elements 54.

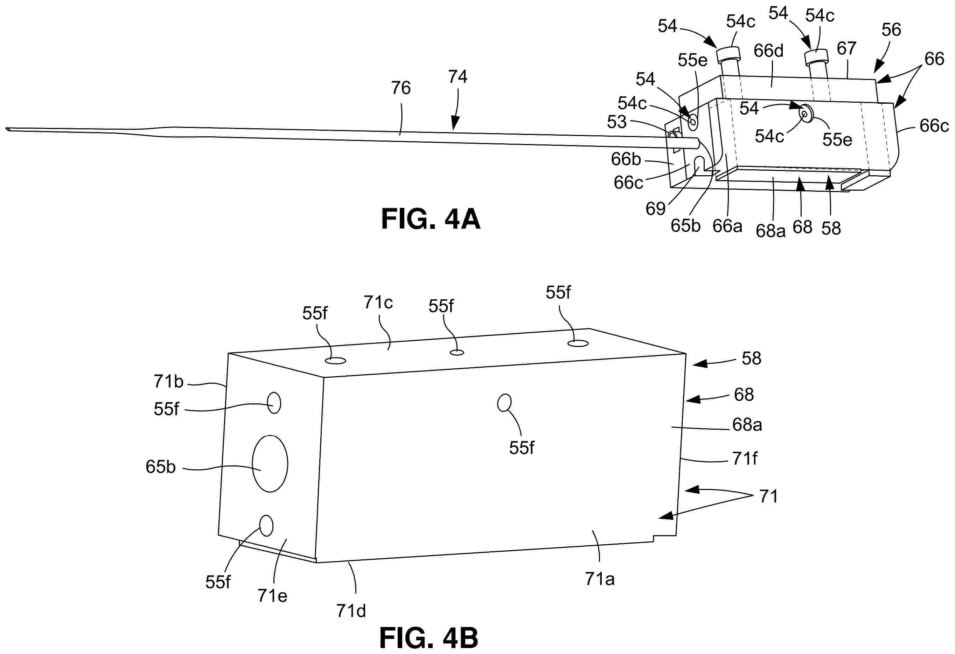

The second heater assembly 52, such as the upper heater assembly 52a, or top heater assembly, comprises the plurality of machined insulation plates 56, such as a plurality of second machined insulation plates (MIP) 66 (see FIGS. 1, 2A-2B), for example, upper machined insulation plates (MIP) 67 (see FIG. 1), or top machined insulation plates. As shown in FIG. 4A, the second machined insulation plates 66 comprise a second machined front insulation plate 66a, a second machined back insulation plate 66b, two (2) second machined end insulation plates 66c, and a second machined top insulation plate 66d. FIG. 4A shows five (5) second machined insulation plates 66. However, more than five (5) second machined insulation plates 66 may be used. The second heater assembly 52, such as the upper heater assembly 52a, further comprises the machined heater block 58, such as a second machined heater block (MHB) 68 (see FIGS. 1, 4A), for example, an upper machined heater block (MHB) 68a (see FIGS. 1, 2A), or top machined heater block, attached to the plurality of second machined insulation plates 66.

The second machined insulation plates 66 insulate heat 30 (see FIG. 1) from the second machined heater block 68, and protect from inadvertent touching by a user of the second machined heater block 68 when it is heated or hot. Each second machined insulation plate 66 is attached to the second machined heater block 68 with one or more attachment elements 54 (see FIGS. 2F, 4A), such as shoulder screws 54c (see FIGS. 2F, 4A), or other suitable attachment elements 54.

The machined insulation plates 56, such as the first machined insulation plates 60 and the second machined insulation plates 66, are preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the first machined insulation plates 60, may also be made of carbon-ceramic matrix, carbon-carbon composite materials, or other suitable materials.

The machined heater blocks 58, such as the first machined heater block 64 and the second machined heater block 68, are preferably made of a metal material (MAT.) 72 (see FIG. 1). Preferably, the metal material 72 comprises, as shown in FIG. 1, stainless steel (SS) 72a, steel 72b, aluminum (AL) 72c, carbon steel (CS) 72d, aluminum (AL) bronze 72e, or another suitable metal material 72. The machined heater blocks 58 may also be made of another suitable material.

As shown in FIG. 2F, in one version, the first machined heater block 64 is larger in size than the second machined heater block 68. In other versions, the first machined heater block 64 may be smaller in size, or equal in size, as compared to a size of the second machined heater block 68.

In one exemplary version, the first machined heater block 64, such as the lower machined heater block 64a, has a surface area of four (4) inches by five (5) inches. In other versions the first machined heater block 64 has a surface area of less than four (4) inches by five (5) inches, or greater than four (4) inches by five (5) inches. For example, if larger thermoplastic composite parts 24 need to be heated, the first machined heater block 64, such as the lower machined heater block 64a, may have a surface area of six (6) inches by six (6) inches, or may have a surface area of ten (10) inches by ten (10) inches, or may have another suitable surface area.

As shown in FIGS. 1, 2A-2B, the heating system 46 further comprises a plurality of heater elements 74, such as cartridge heaters 76. The first heater assembly 50, such as the lower heater assembly 50a, comprises one or more heater elements 74 (see FIGS. 1, 2A-2B), such as one or more first heater elements 88 (see FIGS. 2A-2B), for example, one or more lower heater elements 88a (see FIGS. 2A-2B), coupled to the first machined heater block 64 (see FIG. 2A). As shown in FIG. 2A, the one or more heater elements 74, such as the one or more first heater elements 88, for example, the one or more lower heater elements 88a, are coupled to the first machined heater block 64, such as the lower machined heater block 64a. In one version, FIGS. 2A-2B show five (5) first heater elements 88, such as five (5) lower heater elements 88a, coupled to the first heater assembly 50, such as the lower heater assembly 50a. However, the number of first heater elements 88, such as lower heater elements 88a, may be one (1) to four (4), or greater than five (5). The size of the thermoplastic composite parts 24 being welded together, preferably determine the number of heater elements 74, such as first heater elements 88, for example, lower heater elements 88a, coupled to the first machined heater block 64, such as the lower machined heater block 64a. As shown in FIGS. 1, 2A-2B, each of the five (5) first heater elements 88, such as the five (5) lower heater elements 88a, are attached to a controller 85 having a power supply 86, such as an electrical power supply (ELECT. PS) 86a, via one or more connector elements 90, such as one or more electrical (ELECT.) wires 92. The connector elements 90 may comprise one or more electrical (ELECT.) wires 92, one or more plugs 94 (see FIG. 1), or other types of connector elements 90, such as electrical connector elements.

The second heater assembly 52, such as the upper heater assembly 52a, comprises one or more heater elements 74 (see FIGS. 2A-2B), such as one or more second heater elements 95 (see FIGS. 2A-2B), for example, one or more upper heater elements 95a (see FIGS. 2A-2B), or top heater elements. The one or more heater elements 74, such as the one or more second heater elements 95, for example, the one or more upper heater elements 95a, is/are coupled to the second machined heater block 68 (see FIG. 4A), such as the upper machined heater block 68a (see FIG. 4A). In one version, FIGS. 2A-2B show one (1) second heater element 95, such as one (1) upper heater element 95a, coupled to the second heater assembly 52, such as the upper heater assembly 52a. However, the number of second heater elements 95, such as upper heater elements 95a, may be greater than one (1). The size of the thermoplastic composite parts 24 being welded together, preferably determine the number of heater elements 74 coupled to the second machined heater block 68, such as the upper machined heater block 68a. As shown in FIGS. 2A-2B, each second heater element 95, such as each upper heater element 95a, is attached to the controller 85 having the power supply 86, such as the electrical power supply 86a, via a connector element 90, such as an electrical wire 92.

Each of the one or more heater elements 74, such as the one or more first heater elements 88, for example, the one or more lower heater elements 88a, and such as the one or more second heater elements 95, for example, the one or more upper heater elements 95a, comprises one or more cartridge heaters 76 (see FIGS. 1, 2A-2B). In one version, as shown in FIGS. 1, 2F, each of the one or more heater elements 74 comprises a cartridge heater 76 having one or more heating wires 77 housed in a metal sleeve 80, or metal sheath, and attached to one or more lead wires 78. Each cartridge heater 76 is connected to one of the one or more controllers 85 (see FIGS. 2A-2B). Each cartridge heater 76 may further comprise insulation material, such as lead wire insulation material, and/or metal sleeve insulation material, to allow optimal heat transfer. The insulation material may comprise magnesium oxide, or another suitable insulation material.

Each of the one or more lead wires 78 of each cartridge heater 76 is/are connected to one of the one or more controllers 85 (see FIGS. 2A-2B) having one or more power supplies (PS) 86 (see FIGS. 1, 2A-2B), such as one or more electrical (ELECT.) power supplies (PS) 86a (see FIGS. 1, 2A-2B), that supply power, such as electrical power, to the heater elements 74, such as the cartridge heaters 76. In one version, the power supply 86, such as the electrical power supply 86a, comprises a standard power input of 120 V (one-hundred twenty Volts).

In one version, electrical power from the power supply 86, such as the electrical power supply 86a, is transferred through the lead wires 78 to the one or more heating wires 77 housed in the metal sleeve 80, to cause the one or more heating wire 77 to heat up and to generate heat 30 (see FIG. 1). The electrical resistance transfers as heat 30, via conduction 84 (see FIG. 1), to the thermoplastic composite parts 24 (see FIGS. 2F, 9A-9B), and in particular, to the weldline 28a (see FIGS. 1, 2F, 9A-9B), or bondline 28b (see FIGS. 1, 9A-9B), of the thermoplastic composite parts 24, to allow for quick and efficient electrical resistance heating 82 (see FIG. 1).

Each cartridge heater 76 is preferably a resistance heater that provides electrical resistance heating 82 (see FIG. 1) through conduction 84 (see FIG. 1) from the one or more cartridge heaters 76 to the thermoplastic composite parts 24, and in particular, to the weldline 28a (see FIGS. 1, 2F), or bondline 28b (see FIG. 1), of the thermoplastic composite parts 24 (see FIGS. 1, 2F) being welded together. In one version, each cartridge heater 76 comprises one or more heating wires 77 (see FIGS. 1, 2F), such as one or more resistance heating wires, wound on a supporting core, such as a ceramic core, within the metal sleeve 80 (see FIGS. 1, 2F). The metal sleeve 80 is preferably made of a metal material 72 (see FIG. 1), such as stainless steel 72a (see FIG. 1), stainless steel alloys, nickel-based alloys, or other suitable metal materials 72. The one or more lead wires 78 of each heater element 74, such as each cartridge heater 76, may be covered with a lead wire covering that may be a standard lead wire covering, a braided lead wire covering, an armored lead wire covering, or another suitable lead wire covering.

As shown in FIGS. 1, 2A-2B, each of the first heater assembly 50 and the second heater assembly 52 of the plurality of heater assemblies 48 further comprises one or more thermocouples (TC(S)) 96 coupled to the machined heater blocks 58, such as the first machined heater block 64 and the second machined heater block 68. In FIGS. 2A-2B, although one thermocouple 96 is shown coupled, or attached, to the each machined heater block 58, more than one thermocouple 96 may be coupled, or attached, to each machined heater block 58. Each thermocouple 96 is configured to monitor, and does monitor, the temperature 36 (see FIG. 1) of the heat 30 (see FIG. 1) applied by the one or more heater elements 74, to the thermoplastic composite parts 24, during a thermal welding cycle 75 (see FIG. 1) of the thermoplastic welding 20, or conduction welding 22. Each thermocouple 96 may be used as a differential temperature sensor. As used herein, "thermocouple" means an electrical device having two (2) dissimilar electrical conductors forming an electrical junction, to produce a temperature-dependent voltage as a result of the Seebeck effect, and this voltage can be interpreted to measure temperature. Thermocouple response time can be as little as one second, and when calibrated correctly, a thermocouples can provide a very accurate and precise temperature measurement.

The type of thermocouple 96 used depends on the temperature range and sensitivity needed. For the portable conduction welding apparatus 10, the thermocouple 96 preferably comprises a K-type thermocouple used for high temperature measurements. The K-type thermocouple is very accurate at higher temperatures. The K-type thermocouple comprises two (2) pieces of nickel-chromium alloy and nickel-aluminum alloy, and operates in a temperature range of -200 °C (minus two-hundred degrees Celsius) to 1350 °C (one-thousand three-hundred fifty degrees Celsius (-330 °F (minus three-hundred thirty degrees Fahrenheit) to 2460 °F (two-thousand four-hundred sixty degrees Fahrenheit)).

Other suitable thermocouples 96 that may be used comprise a J-type thermocouple comprised of iron and copper-nickel alloy, and operating in a temperature range of -40 °C (minus forty degrees Celsius) to 1200 °C (one-thousand two-hundred degrees Celsius) (-40 °F (minus forty degrees Fahrenheit) to 2192 °F (two-thousand one-hundred ninety-two degrees Fahrenheit)); an E-type thermocouple comprised of nickel-chromium alloy and copper-nickel alloy, and operating in a temperature range of -270 °C (minus two-hundred seventy degrees Celsius) to 740 °C (seven-hundred forty degrees Celsius) (-454 °F (minus four-hundred fifty-four degrees Fahrenheit) to 1364 °F (one-thousand three-hundred sixty-four degrees Fahrenheit)); or another suitable type of thermocouple 96.

In particular, as shown in FIGS. 2A-2B, the first heater assembly 50, such as the lower heater assembly 50a, comprises a thermocouple 96, such as a first thermocouple 98, for example, a lower thermocouple 98a, or a bottom thermocouple. As shown in FIG. 2A, the thermocouple 96, such as the first thermocouple 98, for example, the lower thermocouple 98a, is coupled to the first machined heater block 64, such as the lower machined heater block 64a. The thermocouple 96, such as the first thermocouple 98, for example, the lower thermocouple 98a, is configured to monitor, and monitors, a temperature 36 of the heat 30 (see FIG. 1) applied by the heater elements 74, such as the first heater elements 88, for example, the lower heater elements 88a, to the first thermoplastic composite part 24a (see FIGS. 2F, 9A-9B). The first thermocouple 98 indicates how hot the first machined heater block 64 is during use.

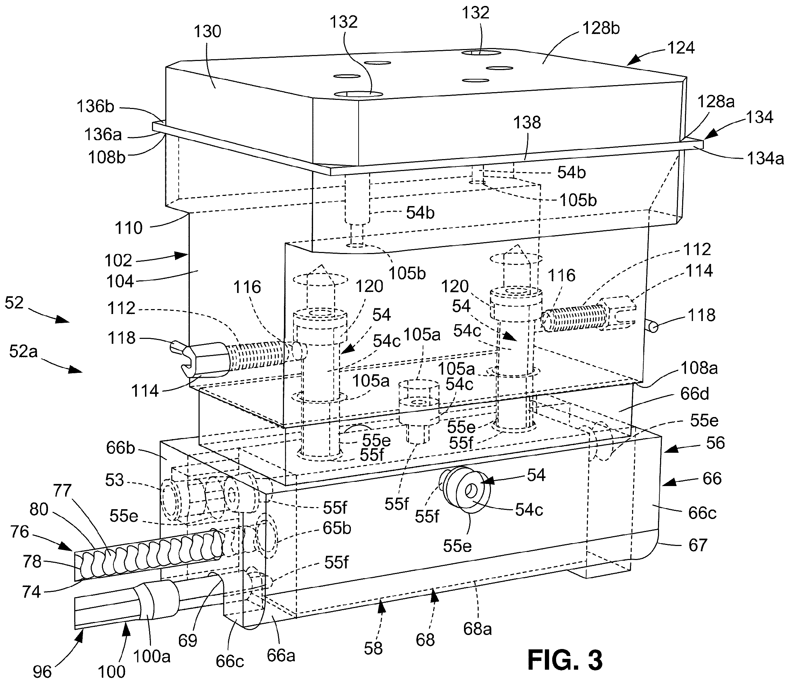

In particular, as shown in FIGS. 2A-2B, the second heater assembly 52, such as the upper heater assembly 52a, comprises a thermocouple 96, such as a second thermocouple 100, for example, an upper thermocouple 100a, or a top thermocouple. The thermocouple 96, such as the second thermocouple 100, for example, the upper thermocouple 100a, is coupled to the second machined heater block 68 (see FIG. 3), such as the upper machined heater block 68a (see FIG. 3). The thermocouple 96, such as the second thermocouple 100, for example, the upper thermocouple 100a, is configured to monitor, and monitors, a temperature 36 of the heat 30 applied by the heater element 74, such as the second heater element 95, for example, the upper heater element 95a, to the second thermoplastic composite part 24b. The second thermocouple 100 indicates how hot the second machined heater block 68 is during use.

As further shown in FIGS. 2A-2B, the first thermocouple 98, such as the lower thermocouple 98a, and the second thermocouple 100, such as the upper thermocouple 100a, are each attached via a connector element 90, such as a plug 94, to the controller 85 having the power supply 86, such as the electrical power supply 86a. As shown in FIGS. 2A-2B, the first thermocouple 98 and the second thermocouple 100, and the first heater elements 88 and the second heater elements 95, are powered with the power supply 86, such as the electrical power supply 86a.

Based on a temperature reading of the first thermocouple 98, the temperature 36 (see FIG. 1) and heat 30 (see FIG. 1) of the first heater elements 88 may be adjusted with the controller 85, such as a heat controller, to increase or to decrease the temperature 36 and the heat 30, to obtain a desired temperature 36 (see FIG. 1), such as a desired melt temperature 36a (see FIG. 1), and heat 30 during thermoplastic welding 20, such as conduction welding 22, of the thermoplastic composite parts 24 (see FIGS. 1, 2F, 9A-9B). Based on a temperature reading of the second thermocouple 100, the temperature 36 (see FIG. 1) and heat 30 (see FIG. 1) of the second heater element 95 may be adjusted with the controller 85, such as a heat controller, to increase or to decrease the temperature 36 and the heat 30, to obtain a desired temperature 36 and heat 30 during thermoplastic welding 20, such as conduction welding 22, of the thermoplastic composite parts 24.

As shown in FIGS. 1, 2A-2B, the second heater assembly 52, such as the upper heater assembly 52a, further comprises a dovetail connector plate 102, such as a press block 104 (see FIG. 3), attached to one or more of the plurality of second machined insulation plates 66. In one version, as shown in FIG. 3, a bottom side 108a of the dovetail connector plate 102 is attached to the second machined top insulation plate 66d, via attachment elements 54 comprising shoulder screws 54c. However, other suitable attachment elements 54 may be used. The dovetail connector plate 102 has spring pins 114 (see FIGS. 2A-2B) each with an arm 118 (see FIGS. 2A-2B) that enable quick connection to the upper machined heater block 68a (see FIG. 3) encapsulating heads 120 (see FIG. 3) of the shoulder screws 54c (see FIG. 3) threaded into the upper machined heater block 68a. The dovetail connector plate 102 is discussed in further detail below with respect to FIG. 3.

As shown in FIGS. 1, 2A-2B, the second heater assembly 52, such as the upper heater assembly 52a, may further preferably comprise a silicone pressure pad 134, such as a high temperature silicone pressure pad 134a (see FIG. 3) coupled to a top side 108b (see FIG. 3) of the dovetail connector plate 102. A bottom side 136a (see FIG. 3) of the silicone pressure pad 134 is coupled, or attached, to a top side 108b (see FIG. 3) of the dovetail connector plate 102. The silicone pressure pad 134 is optional. The silicone pressure pad 134 enables equipment conformability for even pressure to the thermoplastic composite parts 24.

As shown in FIGS. 1, 2A-2B, the second heater assembly 52, such as the upper heater assembly 52a, further comprises an air cylinder isolator plate 124 having bottom side 128a (see FIG. 3) coupled to the dovetail connector plate 102 if no silicone pressure pad 134 is used, and coupled to a top side 136b (see FIG. 3) of the silicone pressure pad 134 when a silicone pressure pad 134 is used. The air cylinder isolator plate 124 adds additional thermal isolation 126 (see FIG. 1) to the second heater assembly 52, such as the upper heater assembly 52a.

As shown in FIGS. 1, 2A-2B, the portable conduction welding apparatus 10 further comprises a support frame assembly 16. As shown in FIGS. 2A-2B, the support frame assembly 16 has a lower portion 140a and an upper portion 140b. As shown in FIGS. 1, 2A-2B, the support frame assembly 16 further comprises a support frame plate 142, such as a C-shaped support frame plate 142a. The support frame plate 142, such as the C-shaped support frame plate 142a, provides a reaction force 154 (see FIG. 1) during thermoplastic welding 20 (see FIG. 1), such as conduction welding 22 (see FIG. 1). The support frame plate 142, such as the C-shaped support frame plate 142a, also couples or connects the first heater assembly 50 (see FIGS. 2A-2B), such as the lower heater assembly 50a (see FIGS. 2A-2B), to the second heater assembly 52 (see FIGS. 2A-2B), such as the upper heater assembly 52a (see FIGS. 2A-2B). Preferably, the support frame plate 142, such as the C-shaped support frame plate 142a, is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As shown in FIG. 1, 2A-2B, the support frame assembly 16 further comprises a plurality of support angle portions 156. As shown in FIGS. 2A-2B, the support angle portions 156 comprise foot angle portions 156a attached or fastened at the bottom of each side of the lower portion 140a of the support frame plate 142. FIGS. 2A-2B show, in one version, two (2) foot angle portions 156a. However, in other versions, more than two (2) foot angle portions 156a may be used. As shown in FIGS. 2A-2B, the foot angle portions 156a are attached to the lower portion 140a, or base, of the support frame plate 142, to orient and support the support frame assembly 16 in an upright orientation 160 (see FIG. 1). Preferably, the foot angle portions 156a are made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As further shown in FIGS. 2A-2B, the support angle portions 156 further comprise bottom heater angle portions 156b attached or fastened above the foot angle portions 156a on each side of the lower portion 140a of the support frame plate 142. FIGS. 2A-2B show, in one version, two (2) bottom heater angle portions 156b. However, in other versions, more than two (2) bottom heater angle portions 156b may be used. The bottom heater angle portions 156b support and set a flat orientation of the first heater assembly 50 (see FIGS. 2A-2B), such as the lower heater assembly 50a (see FIGS. 2A-2B). Preferably, the bottom heater angle portions 156b are made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

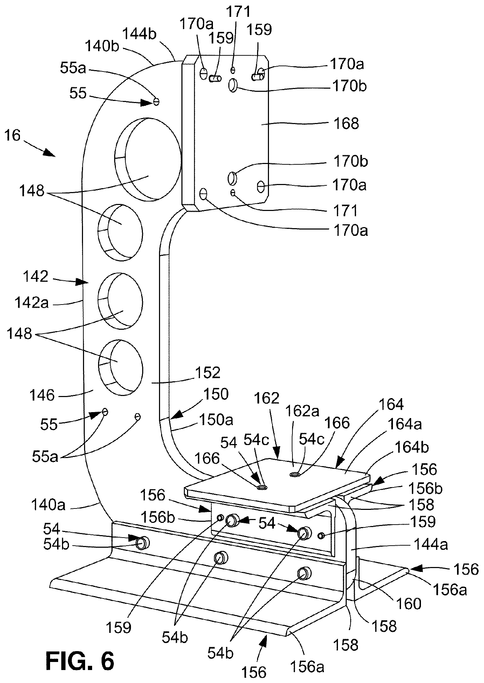

The support frame assembly 16 further comprises a spacer plate 162 (see FIGS. 1, 2A-2B, 6), such as a bottom spacer plate 162a (see FIGS. 1, 6), attached to at least two (2) of the plurality of support angle portions 156, such as two (2) bottom heater angle portions 156b. The spacer plate 162, such as the bottom spacer plate 162a, enables a surface area (SA) 164 (see FIGS. 1, 6), such as a large surface area (SA) 164a (see FIGS. 1, 6), for the reaction force 154 (see FIG. 1). The spacer plate 162, such as the bottom spacer plate 162a, also adds added surface area (SA) 164b (see FIGS. 1, 6) for thermal isolation 126 (see FIG. 1). Preferably, the spacer plate 162, such as the bottom spacer plate 162a, is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

The support frame assembly 16 further comprises an actuator mating plate 168 (see FIGS. 1, 2A-2B) attached to the upper portion 140b of the support frame plate 142. The actuator mating plate 168 enables attachment to the linear pneumatic actuator assembly 172 (see FIGS. 1, 2A-2B). Preferably, the actuator mating plate 168 is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

The support frame assembly 16 is discussed in further detail below with respect to FIG. 6.

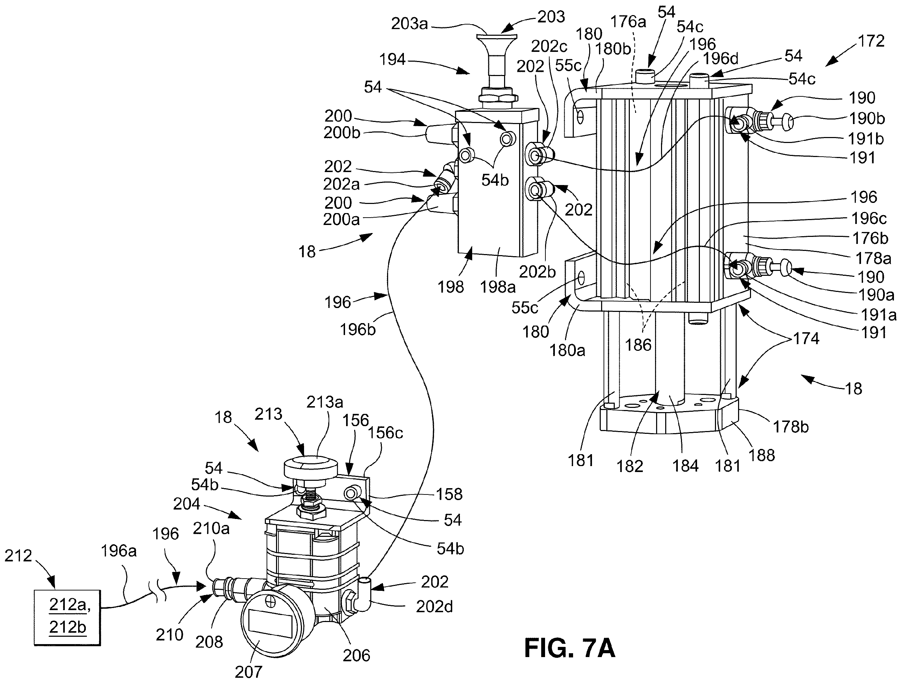

As shown in FIGS. 1, 2A-2B, the portable conduction welding apparatus 10 further comprises an air pressure assembly 18 configured to apply a force 106 (see FIG. 1) during the conduction welding 22 of the thermoplastic composite parts 24 (see FIG. 1). As shown in FIGS. 1, 2A-2B, the air pressure assembly 18 comprises a linear pneumatic actuator assembly (ASSY.) 172 coupled, or attached, to the upper portion 140b of the support frame assembly 16, a directional air valve assembly (ASSY.) 194 attached to the upper portion 140b of the support frame assembly 16, and an air regulator assembly 204 attached to the lower portion 140a of the support frame assembly 16. The air pressure assembly 18 may further comprise a plurality of air hose lines 196 (see FIGS. 2A-2B, 7A), such as a first air hose line 196a (see FIGS. 1, 7A), a second air hose line 196b (see FIG. 7A), a third air hose line 196c (see FIG. 7A), and a fourth air hose line 196d (see FIG. 7A). The air hose lines 196 are discussed in further detail below with respect to FIG. 7A.

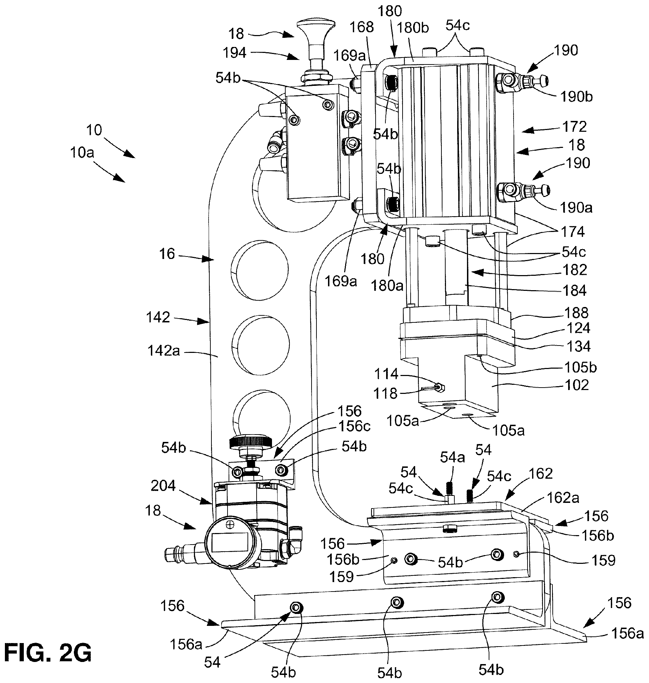

As shown in FIGS. 2A-2B, the linear pneumatic actuator assembly 172 comprises a housing 174 with a base 188, and with a linear pneumatic actuator 182 (see FIG. 2B), such as a guided air cylinder 184 (see FIG. 2B). The linear pneumatic actuator 182 is configured to extend to an extended position 185b (see FIG. 2F) when supplied with air 212a (see FIGS. 2A-2B), such as pressurized air 212b (see FIGS. 2A-2B) from an air supply 212 (see FIGS. 2A-2B). The linear pneumatic actuator 182 is configured to retract to a retracted position 185a (see FIGS. 2D, 2G) when pushed to retract. The linear pneumatic actuator 182, such as the guided air cylinder 184, is configured to move up and down along guide members 186 (see FIG. 2F) coupled to an interior 176a (see FIG. 2F) of the housing 174 (see FIG. 2F).

As further shown in FIGS. 2A-2B, the linear pneumatic actuator assembly 172 comprises a plurality of air flow ports 190, such as an air flow inlet port 190a and another air flow inlet port 190b, coupled to the housing 174, and configured to engage and disengage the linear pneumatic actuator 182. The directional air valve assembly 194 is configured to control an air flow 192 (see FIG. 1) to the linear pneumatic actuator assembly 172.

As shown in FIGS. 2A-2B, the air regulator assembly 204 is attached to the support frame assembly 16 via a support angle portion 156, such as an air regulator angle portion 156c. The linear pneumatic actuator assembly 172 is discussed in further detail below with respect to FIGS. 7A-7E).

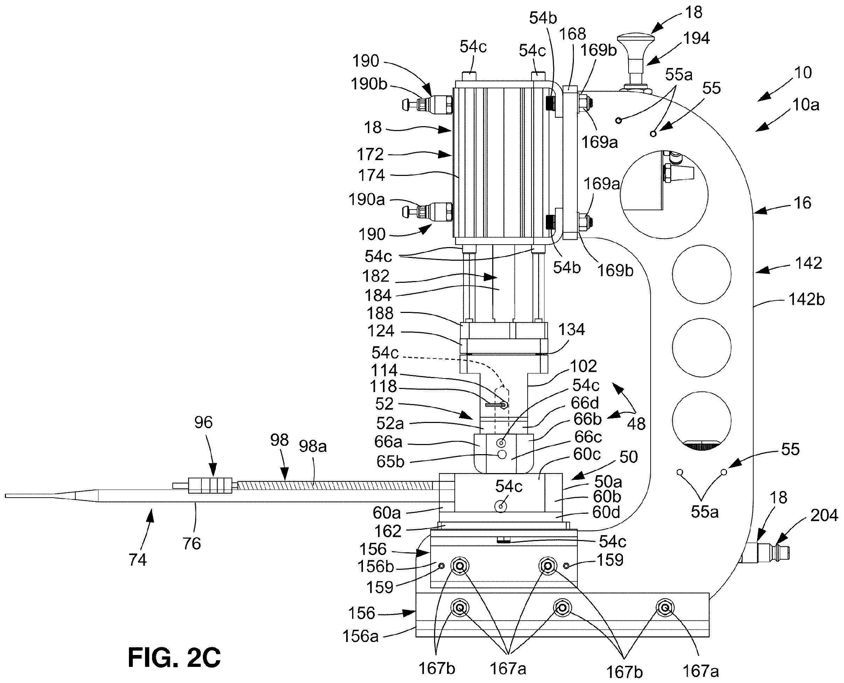

Now referring to FIGS. 2C-2G, FIGS. 2C-2G show various views of the portable conduction welding apparatus 10, such as the portable conduction welding tool 10a, of FIG. 2A, with the controller 85 (see FIGS. 2A-2B), the power supply 86 (see FIGS. 2A-2B), the connector elements 90 (see FIGS. 2A-2B), the air supply 212 (see FIGS. 2A-2B), and the air hose line 196 (see FIGS. 2A-2B), of FIG. 2A, removed. It is understood that although the controller 85 (see FIGS. 2A-2B), the power supply 86 (see FIGS. 2A-2B), the connector elements 90 (see FIGS. 2A-2B), the air supply 212 (see FIGS. 2A-2B), and the air hose line 196 (see FIGS. 2A-2B) are not shown in FIGS. 2C-2G, the portable conduction welding apparatus 10, such as the portable conduction welding tool 10a, of FIGS. 2C-2G are used with these components during conduction welding 22 (see FIG. 1).

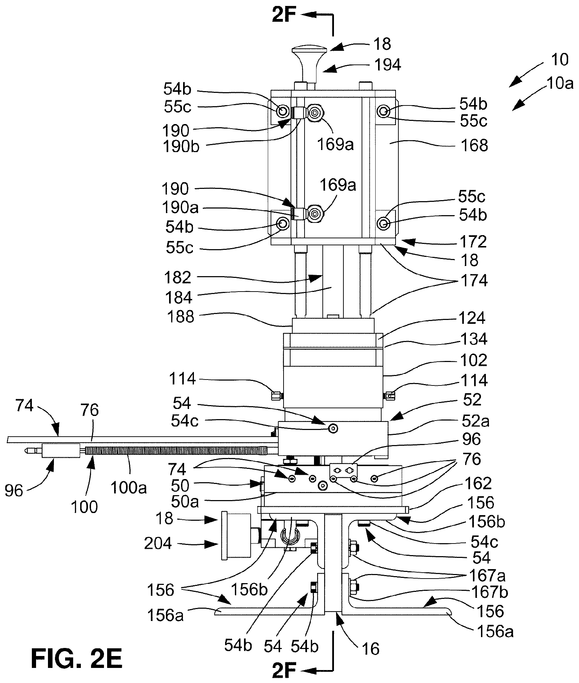

FIG. 2C is an illustration of a left side view of the portable conduction welding apparatus 10, such as the portable conduction welding tool 10a, of FIG. 2A. FIG. 2D is an illustration of a right side view of the portable conduction welding apparatus 10, such as the portable conduction welding tool 10a, of FIG. 2C. FIG. 2E is an illustration of a front view of the portable conduction welding apparatus 10, such as the portable conduction welding tool 10a, of FIG. 2C. FIG. 2F is an illustration of a cross-sectional left side view of the portable conduction welding apparatus 10, such as the portable conduction welding tool 10a, taken along lines 2F-2F, of FIG. 2E, with thermoplastic composite parts 24 added. FIG. 2G is an illustration of a right side perspective view of the portable conduction welding apparatus 10, such as the portable conduction welding tool 10a, of FIG. 2C, where a lower heater assembly 50a, and upper machined insulation plates 67 attached to an upper machined heater block 68a are removed.

FIGS. 2C-2G show the support frame assembly 16 with the support frame plate 142 (see FIGS. 2C-2D, 2F-2G), such as the C-shaped support frame plate 142a (see FIGS. 2C-2D, 2F-2G). As shown in FIGS. 2C, 2F, the support frame plate 142 has holes 55, such as support frame plate holes 55a, for insertion of attachment elements 54 (see FIGS. 2D-2E, 2G), such as cap screws 54b (see FIGS. 2D-2E, 2G) secured with hex nuts 167a (see FIGS. 2C, 2E) and plain washers 167b (see FIGS. 2C, 2E), to attach the foot angle portions 156a, the bottom heater angle portions 156b, and the air regulator angle portion 156c, and the directional air valve assembly 194 (see FIGS. 2C, 2F).

FIGS. 2C-2G further show the plurality of support angle portions 156 comprising the foot angle portions 156a, the bottom heater angle portions 156b (see FIGS. 2C-2E, 2G), and the air regulator angle portion 156c (see FIG. 2G), each having holes 55, such as support angle holes 55b (see FIG. 2D), for insertion of the attachment elements 54 (see FIGS. 2D-2E, 2G), such as cap screws 54b (see FIGS. 2D-2E, 2G) secured with the hex nuts 167a (see FIGS. 2C, 2E) and the plain washers 167b (see FIGS. 2C, 2E). FIGS. 2C, 2D, 2G further show the bottom heater angle portions 156b with roll pins 159 inserted through roll pin openings 171 (see FIG. 2F) formed in the support frame assembly 16.

FIGS. 2C-2G further show the spacer plate 162, such as the bottom spacer plate 162a (see FIG. 2G) attached to the bottom heater angle portions 156b with attachment elements 54 (see FIG. 2E), such as shoulder screws 54c (see FIGS. 2C-2E).

FIGS. 2C-2D, 2F-2G show the actuator mating plate 168 attached to the support frame plate 142 via attachment elements 54 (see FIG. 2F), such as cap screws 54b (see FIG. 2F) having lock nuts 169a (see FIG. 2E), inserted through actuator mating plate openings 170b (see FIG. 2F), and via roll pins 159 (see FIG. 2F) inserted through roll pin openings 171 (see FIG. 2F).

FIGS. 2C-2G further show the air pressure assembly 18 comprising the linear pneumatic actuator assembly 172, the directional air valve assembly 194, and the air regulator assembly 204. The linear pneumatic actuator assembly 172 comprises the housing 174 (see FIGS. 2C, 2E-2G) having an interior 176a (see FIG. 2F) and an exterior 176b (see FIG. 2F), the linear pneumatic actuator 182 (see FIGS. 2C-2G), such as the guided air cylinder 184 (see FIGS. 2C-2G), the base 188 (see FIGS. 2C-2G), the air flow ports 190 (see FIGS. 2C-2G), such as the air flow inlet port 190a (see FIGS. 2C-2G) and the air flow inlet port 190b (see FIGS. 2C-2G), and the mounting brackets 180 (see FIG. 2G), such as the first mounting bracket 180a (see FIG. 2G) and the second mounting bracket 180b (see FIG. 2G), attached to the actuator mating plate 168 (see FIG. 2G) via cap screws 54b (see FIGS. 2C-2E, 2G) having lock nuts 169a (see FIGS. 2C-2D, 2G) and washers 169b (see FIGS. 2C-2D, 2G). The mounting brackets 180 (see FIG. 2G) are attached on the top and bottom to the housing 174, via shoulder screws 54c (see FIGS. 2C-2D, 2F-2G). FIG. 2E further shows the mounting bracket holes 55c with the cap screws 54b attaching the mounting brackets 180 (see FIG. 2G) to the actuator mating plate 168 (see FIG. 2G).

FIGS. 2D, 2G show the linear pneumatic actuator 182, such as the guided air cylinder 184, in the retracted position 185a, and FIG. 2F shows linear pneumatic actuator 182, such as the guided air cylinder 184, in the extended position 185b. FIG. 2F further shows the linear pneumatic actuator 182, such as the guided air cylinder 184, comprising a piston 183a and a piston head 183b moving along guide members 186 in the interior 176a of the housing 174. The linear pneumatic actuator 182, such as the guided air cylinder 184, travels in a downward direction 187a (see FIG. 2F) to the extended position 185b, when supplied with air 212a (see FIGS. 2A-2B), such as pressurized air 212b (see FIGS. 2A-2B) from an air supply 212 (see FIGS. 2A-2B), and travels in an upward direction 187b to return to the retracted position 185a (see FIGS. 2D, 2G) with removal of the air 212a, such as the pressurized air 212b.

The linear pneumatic actuator 182, such as the guided air cylinder 184, applies a force (F) 106 against the second heater assembly 52, such as the upper heater assembly 52a, against the thermoplastic composite parts 24, such as the first thermoplastic composite part 24a and the second thermoplastic composite part 24b, and against the first heater assembly 50, such as the lower heater assembly 50a. FIG. 2F further shows the first contact interface 26a of the first thermoplastic composite part 24a and the second contact interface 26b of the second thermoplastic composite part 24b. FIG. 2F further shows the weldline 28a of the thermoplastic composite parts 24.

The portable conduction welding apparatus 10 is portable and is configured to weld together at the weldline 28a (see FIGS. 1, 2F), the first thermoplastic composite part 24a (see FIGS. 1, 2F) aligned to the first heater assembly 50 (see FIGS. 1, 2F) and a second thermoplastic composite part 24b (see FIGS. 1, 2F) aligned to the second heater assembly 52 (see FIGS. 1, 2F), by applying the force 106 (see FIGS. 1, 2F) from the air pressure assembly 18 (see FIGS. 1, 2F) on the weldline 28a, and conducting heat 30 (see FIG. 1) from the one or more first heater elements 88 (see FIG. 2A) and the one or more second heater elements 95 (see FIG. 2A) at the weldline 28a during a thermal welding cycle 75 (see FIG. 1) of the conduction welding 22 (see FIG. 1), to melt thermoplastic composite material 25 (see FIG. 1) of the first thermoplastic composite part 24a and the second thermoplastic composite part 24b at the weldline 28a, to obtain welded thermoplastic composite parts 24c (see FIGS. 1, 9A-9B).

FIGS. 2C-2F show the first heater assembly 50, such as the lower heater assembly 50a, or bottom heater assembly. In FIG. 2G, the first heater assembly 50, such as the lower heater assembly 50a, or bottom heater assembly, is removed to show the attachment elements 54, such as screws 54a, for example, shoulder screws 54c, that are configured to couple, or attach, the first heater assembly 50, such as the lower heater assembly 50a, to the spacer plate 162 (see FIG. 2G), such as the bottom spacer plate 162a (see FIG. 2G), and to the bottom heater angle portions 156b (see FIG. 2G).

In one version, the first heater assembly 50, such as the lower heater assembly 50a, comprises the first machined front insulation plate 60a (see FIGS. 2C-2D, 2F), the first machined back insulation plate 60b (see FIGS. 2C-2D, 2F), two (2) first machined end insulation plates 60c (see FIGS. 2C-2D), and the first machined bottom insulation plate 60d (see FIGS. 2C-2D, 2F). The first heater assembly 50, such as the lower heater assembly 50a, further comprises the first machined heater block 64 (see FIG. 2F), the one or more heater elements 74 (see FIGS. 2C-2F), such as the one or more cartridge heaters 76 (see FIGS. 2C-2F) extending from the lower heater assembly 50a, and the one or more thermocouples 96 (see FIGS. 2C-2E), such as the first thermocouple 98 (see FIGS. 2C-2D), or lower thermocouple 98a (see FIGS. 2C-2D). The first heater assembly 50, such as the lower heater assembly 50a, further comprises a shoulder screw 54c (see FIGS. 2C-2D) and a ring terminal 53 (see FIG. 2D).

FIGS. 2C-2F show the second heater assembly 52, such as the upper heater assembly 52a, or top heater assembly. In FIG. 2G, the second heater assembly 52, such as the upper heater assembly 52a, or top heater assembly, is removed to show the first openings 105a in the bottom of the dovetail connector plate 102. As shown in FIG. 2G, the dovetail connector plate 102 also has a second opening 105b.

In one version, the second heater assembly 52, such as the upper heater assembly 52a, comprises the second machined front insulation plate 66a (see FIGS. 2C-2D, 2F), the second machined back insulation plate 66b (see FIGS. 2C-2D, 2F), two (2) second machined end insulation plates 66c (see FIG. 2C), and the second machined top insulation plate 66d (see FIGS. 2C-2D, 2F). The second heater assembly 52, such as the upper heater assembly 52a, further comprises the second machined heater block 68 (see FIG. 2F).

The second heater assembly 52, such as the upper heater assembly 52a, further comprises the one or more heater elements 74 (see FIGS. 2E-2F), such as the one or more cartridge heaters 76 (see FIGS. 2E-2F) extending from the upper heater assembly 52a, and the one or more thermocouples 96 (see FIGS. 2D-2E), such as the second thermocouple 100 (see FIGS. 2D-2E), or upper thermocouple 100a (see FIGS. 2D-2E). The second heater assembly 52, such as the upper heater assembly 52a, further comprises a shoulder screw 54c (see FIGS. 2C-2F) and an upper machined heater block opening 65b (see FIG. 2C).

The second heater assembly 52, such as the upper heater assembly 52a, further comprises the dovetail connector plate 102 (see FIGS. 2C-2F) having the spring pins 114 (see FIGS. 2C-2E, 2G) each with an arm 118 (see FIGS. 2C-2D, 2G). FIG. 2C shows a shoulder screw 54c within the dovetail connector plate 102.

As shown in FIGS. 2C-2F, the second heater assembly 52, such as the upper heater assembly 52a, further comprises the silicone pressure pad 134 and the air cylinder isolator plate 124 having isolator plate openings 132 (see FIG. 2F). FIG. 2F shows the air cylinder isolator plate 124 attached to the base 188 of the housing 174 of the linear pneumatic actuator assembly 172, via two (2) attachment elements 54, such as cap screws 54b.

Now referring to FIG. 3, FIG. 3 is an illustration of a front perspective view of an exemplary version of a second heater assembly 52, such as an upper heater assembly 52a, of the portable conduction welding apparatus 10, of FIG. 2A. As shown in FIG. 3, the second heater assembly 52, such as the upper heater assembly 52a, comprises a plurality of machined insulation plates 56, such as a plurality of second machined insulation plates 66, for example, upper machined insulation plates 67, or top machined insulation plates, attached to a machined heater block 58, such as a second machined heater block 68, for example, an upper machined heater block 68a, or top machined heater block.

In one version, as shown in FIG. 3, the plurality of second machined insulation plates 66 comprise the second machined front insulation plate 66a, the second machined back insulation plate 66b, two (2) second machined end insulation plates 66c, and the second machined top insulation plate 66d. FIG. 3 shows five (5) second machined insulation plates 66. However, more than five (5) second machined insulation plates 66 may be used. The second machined insulation plates 66 insulate heat 30 (see FIG. 1) from the second machined heater block 68, and protect from inadvertent touching by a user of the second machined heater block 68 when it is heated or hot. Each second machined insulation plate 66 is attached to the second machined heater block 68 with one or more attachment elements 54 (see FIG. 3), such as shoulder screws 54c (see FIG. 3), or other suitable attachment elements 54. As shown in FIG. 3, the second machined insulation plate hole 55e on the second machined front insulation plate 66a holds a shoulder screw 54c, which is also inserted into a second machined heater block hole 55f of the second machined heater block 68.

The machined insulation plates 56, such as the second machined insulation plates 66, are preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the first machined insulation plates 60 and the second machined insulation plates 66, may also be made of carbon-ceramic matrix, carbon-carbon composite materials, or other suitable materials.

The machined heater block 58, such as the second machined heater block 68, is preferably made of a metal material 72 (see FIG. 1). Preferably, the metal material 72 comprises, as shown in FIG. 1, stainless steel 72a, steel 72b, aluminum 72c, carbon steel 72d, aluminum bronze 72e, or another suitable metal material 72. The machined heater block 58 may also be made of another suitable material.

As shown in FIG. 3, in one version, each of the second machined end insulation plates 66c has a second machined insulation plate hole 55e with an attachment element 54 (see FIG. 4A), such as a shoulder screw 54c (see FIG. 4A), attaching each second machined end insulation plate 66c to the upper machined heater block 68a. As further shown in FIG. 3, one of the second machined end insulation plates 66c has an upper machined heater block opening 65b receiving the heater element 74, such as the cartridge heater 76. FIG. 3 shows the heater element 74, such as the cartridge heater 76, extending from the second machined heater block 68, such as the upper machined heater block 68a, through the upper machined heater block opening 65b, and extending from the second machined end insulation plate 66c. As shown in FIG. 3, the heater element 74, such as the cartridge heater 76, has one or more heating wires 77 housed in the metal sleeve 80, or metal sheath, and attached to one or more lead wires 78. The heater element 74 is configured to connect to the controller 85 (see FIG. 2A) and to the power supply 86 (see FIG. 2A). FIG. 3 shows one heater element 74. However, in other versions, more than one heater element 74 may be used with the second machined heater block 68.

As further shown in FIG. 3, the same second machined end insulation plate 66c has a notch opening 69 with a portion of a thermocouple 96, such as a second thermocouple 100, for example, an upper thermocouple 100a, inserted through the notch opening 69. As further shown in FIG. 3, the same second machined end insulation plate 66c has a ring terminal 53, and the second machined heater block 68 has a second machined heater block hole 55f for the thermocouple 96.

As further shown in FIG. 3, the second heater assembly 52, such as the upper heater assembly 52a, comprises the dovetail connector plate 102, such as a press block 104, is attached to the second machined top insulation plate 66d via three (3) attachment elements 54, such as shoulder screws 54c, inserted through first openings 105 in the dovetail connector plate 102, inserted through second machined insulation plate holes 55e, and inserted through second machined heater block holes 55f. As further shown in FIG. 3, the dovetail connector plate 102 has two (2) spring pins 114 inserted through theaded openings 112 in the dovetail connector plate 102. As shown in FIG. 3, each spring pin 114 has a spring-loaded plunger 116 and an arm 118. The dovetail connector plate enables quick connection to the upper machined heater block 68a, via the spring pins 114 encapsulating a head 120 (see FIG. 3) of each shoulder screw 54c in contact with each spring pin 114. The dovetail connector plate 102 transfers force 106 (see FIGS. 1, 2F) from the linear pneumatic actuator 182, such as the guided air cylinder 184, to the upper machined heater block 68a. As shown in FIG. 3, the dovetail connector plate 102 has a bottom side 108a, a top side 108b, and a T-shaped body 110, or a dovetail-shaped body.

The dovetail connector plate 102 is preferably made of a metal material (MAT.) 72 (see FIG. 1), such as aluminum 72c (see FIG. 1). However, the dovetail connector plate 102 may also be made of stainless steel 72a (see FIG. 1), steel 72b (see FIG. 1), carbon steel 72d (see FIG. 1), aluminum bronze 72e (see FIG. 1), or another suitable metal material 72. The dovetail connector plate 102 may also be made of another suitable material.

As further shown in FIG. 3, the second heater assembly 52, such as the upper heater assembly 52a, may preferably comprise the silicone pressure pad 134, such as the high temperature silicone pressure pad 134a. As shown in FIG. 3, the silicone pressure pad 134, such as the high temperature silicone pressure pad 134a, has a bottom side 136a, a top side 136b, and a square-shaped body 138. As shown in FIG. 3, the bottom side 136a of the silicone pressure pad 134 is coupled, or attached, to the top side 108b of the dovetail connector plate 102, via cap screws 54b inserted through second openings 105b in the dovetail connector plate 102. The silicone pressure pad 134, such as the high temperature silicone pressure pad 134a, enables equipment conformability for even pressure to the thermoplastic composite parts 24 being welded.

As further shown in FIG. 3, the second heater assembly 52, such as the upper heater assembly 52a, comprises the air cylinder isolator plate 124 having a bottom side 128a, a top side 128b, a block body 130, and isolator plate openings 132 receiving the cap screws 54b attaching the air cylinder isolator plate 124, the silicone pressure pad 134, and the dovetail connector plate 102 together. As shown in FIG. 3, the bottom side 128a of the air cylinder isolator plate 124 is coupled, or attached, to the top side 136b of the silicone pressure pad 134. The air cylinder isolator plate 124 connects the linear pneumatic actuator 182, such as the guided air cylinder 184, to the dovetail connector plate 102, via attachment elements 54, such as cap screws 54b, or other suitable attachment elements 54. The air cylinder isolator plate 124 adds additional thermal isolation 126 to the second heater assembly 52.

The air cylinder isolator plate 124 is preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the first machined insulation plates 60, may also be made of carbon-ceramic matrix, carbon-carbon composite materials, or other suitable materials.

Now referring to FIG. 4A, FIG. 4A is an illustration of a front perspective view of the plurality of machined insulation plates 56, such as the plurality of second machined insulation plates 66, for example, upper machined insulation plates 67, or top machined insulation plates, attached to a machined heater block 58, such as a second machined heater block 68, for example, an upper machined heater block 68a, or top machined heater block, of the second heater assembly 52 (see FIG. 3), such as the upper heater assembly 52a (see FIG. 3), or top heater assembly, of the upper heater assembly 52a of FIG. 3.

In one version, as shown in FIG. 4A, the plurality of second machined insulation plates 66 comprise a second machined front insulation plate 66a, a second machined back insulation plate 66b, two (2) second machined end insulation plates 66c, and a second machined top insulation plate 66d. FIG. 4A shows five (5) second machined insulation plates 66. However, more than five (5) second machined insulation plates 66 may be used. The second machined insulation plates 66 insulate heat 30 (see FIG. 1) from the second machined heater block 68, and protect from inadvertent touching of the second machined heater block 68 when it is heated or hot. Each second machined insulation plate 66 is attached to the second machined heater block 68 with one or more attachment elements 54 (see FIGS. 2F, 4A), such as shoulder screws 54c (see FIGS. 2F, 4A), or other suitable attachment elements 54.

As shown in FIG. 4A, in one version, the second machined front insulation plate 66a has a second machined insulation plate hole 55e with an attachment element 54, such as a shoulder screw 54c, attaching the second machined front insulation plate 66a to the upper machined heater block 68a. Similarly, the second machined back insulation plate 66b has a second machined insulation plate hole 55e, with an attachment element 54, such as a shoulder screw 54c, attaching the second machined back insulation plate 66b to the upper machined heater block 68a.

As shown in FIG. 4A, in one version, each of the second machined end insulation plates 66c has a second machined insulation plate hole 55e with an attachment element 54, such as a shoulder screw 54c, attaching each second machined end insulation plate 66c to the upper machined heater block 68a. As further shown in FIG. 4A, one of the second machined end insulation plates 66c has an upper machined heater block opening 65b configured to receive a heater element 74, such as a cartridge heater 76. FIG. 4A shows the heater element 74, such as the cartridge heater 76, extending from the second machined heater block 68, such as the upper machined heater block 68a, through the upper machined heater block opening 65b, and extending from the second machined end insulation plate 66c. The heater element 74, such as the cartridge heater 76, is configured to connect to the controller 85 (see FIG. 2A) and to the power supply 86 (see FIG. 2A). FIG. 4A shows one heater element 74. However, in other versions, more than one heater element 74 may be used with the second machined heater block 68.

As further shown in FIG. 4A, the same second machined end insulation plate 66c has a notch opening 69 configured to receive a thermocouple 96 (see FIG. 2B). As further shown in FIG. 4A, the same second machined end insulation plate 66c has a ring terminal 53.

The machined insulation plates 56, such as the second machined insulation plates 66, are preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the second machined insulation plates 66, may also be made of carbon-ceramic matrix, carbon-carbon composite materials, or other suitable materials.

Now referring to FIG. 4B, FIG. 4B is an illustration of a front perspective view of the machined heater block 58, such as the second machined heater block 68, for example, the upper machined heater block 68a, or top machined heater block, of FIG. 4A. As shown in FIG. 4B, the machined heater block 58, such as the second machined heater block 68, for example, the upper machined heater block 68a, or top machined heater block, has six (6) sides 71 comprising a front side 71a, a back side 71b, a top side 71c, a stepped bottom side 71d, a first end side 71e, and a second end side 71f. The first machined heater block 64 preferably has a substantially rectangular shape or another suitable geometric shape.

As shown in FIG. 4B, in one version, the front side 71a of the second machined heater block 68 has a second machined heater block hole 55f configured to receive an attachment element 54 (see FIG. 4A), such as a shoulder screw 54c (see FIG. 4A), or another suitable attachment element 54, to attach the second machined front insulation plate 66a (see FIG. 4A) to the front side 71a of the second machined heater block 68. Similarly, the back side 71b has one or more second machined heater block holes 55f configured to receive attachment elements 54, such as shoulder screws 54c (see FIG. 4A), or other suitable attachment elements 54, to attach the second machined back insulation plate 66b (see FIG. 4A) to the back side 71b of the second machined heater block 68.

As shown in FIG. 4B, in one version, the top side 71c of the second machined heater block 68 has three (3) second machined heater block holes 55f configured to receive attachment elements 54 (see FIG. 4A), such as shoulder screws 54c (see FIG. 4A), or other suitable attachment elements 54, to attach the second machined top insulation plate 66d (see FIG. 4A) to the top side 71c.

As further shown in FIG. 4B, the first end side 71e of the second machined heater block 68 has an upper machined heater block opening 65b configured to receive a portion of a heater element 74 (see FIG. 4A), such as a cartridge heater 76 (see FIG. 4A). In other versions, the first end side 71e may have more than one (1) upper machined heater block openings 65b. Similarly, the second end side 71f has an upper machined heater block opening 65b configured to receive a portion of the heater element 74 (see FIG. 4A), such as the cartridge heater 76 (see FIG. 4A), that extends through the interior of the second machined heater block 68.

As shown in FIG. 4B, in one version, the first end side 71e further has a second machined heater block hole 55f positioned below the upper machined heater block opening 65b, and configured to receive a thermocouple 96 (see FIG. 3). As shown in FIG. 5A, in one version, the first end side 71e further has a second machined heater block hole 55f positioned above the upper machined heater block opening 65b, and configured to receive an attachment element 54 (see FIG. 4A), such as a shoulder screw 54c (see FIG. 4A). Similarly, the second end side 71f has one or more second machined heater block holes 55f configured to receive attachment elements 54, such as shoulder screws 54c (see FIG. 4A), or other suitable attachment elements 54, to attach the other second machined end insulation plates 66c (see FIG. 4A) to the second end side 71f of the second machined heater block 68.

The machined heater block 58, such as the second machined heater block 68, is preferably made of a metal material 72 (see FIG. 1). Preferably, the metal material 72 comprises, as shown in FIG. 1, stainless steel 72a, steel 72b, aluminum 72c, carbon steel 72d, aluminum bronze 72e, or another suitable metal material 72. The machined heater block 58 may also be made of another suitable material.

The machined heater block 58, such as the second machined heater block 68, for example, the upper machined heater block 68a, or top machined heater block, of the second heater assembly 52, such as the upper heater assembly 52a, conducts heat 30 (see FIG. 1) from the heater element 74 (see FIG. 4A), such as the cartridge heater 76 (see FIG. 4A), to the thermoplastic composite parts 24 (see FIG. 2F). The machined heater block 58, such as the second machined heater block 68, for example, the upper machined heater block 68a, or top machined heater block, is fastened to the first machined insulation plates 60, and is also fastened to the dovetail connector plate 102 (see FIG. 3), via the shoulder screws 54c (see FIG. 4A) inserted through the second machined top insulation plate 66d (see FIG. 4A).

Now referring to FIG. 5A, FIG. 5A is an illustration of a right side front perspective view of a first heater assembly 50, such as a lower heater assembly 50a, of the portable conduction welding apparatus 10, of FIG. 2A. As shown in FIG. 5A, the first heater assembly 50, such as the lower heater assembly 50a, comprises the plurality of machined insulation plates 56, such as the plurality of first machined insulation plates 60, for example, lower machined insulation plates 62, or bottom machined insulation plates, and comprises the machined heater block 58, such as the first machined heater block 64, for example, the lower machined heater block 64a, or bottom machined heater block, attached to, and surrounded by, the machined insulation plates 56, such as the plurality of first machined insulation plates 60.

In one version, as shown in FIG. 5A, the plurality of first machined insulation plates 60 comprise a first machined front insulation plate 60a, a first machined back insulation plate 60b, two (2) first machined end insulation plates 60c, and a first machined bottom insulation plate 60d. FIG. 5A shows five (5) first machined insulation plates 60. However, more than five (5) first machined insulation plates 60 may be used. The first machined insulation plates 60 insulate heat 30 (see FIG. 1) from the first machined heater block 64, and protect from inadvertent touching of the first machined heater block 64 when it is heated or hot. The first machined insulation plates 60 are attached to the first machined heater block 64 with attachment elements 54 (see FIGS. 2D, 5A), such as shoulder screws 54c (see FIGS. 2D, 5A), inserted through first machined insulation plate holes 55g (see FIG. 5A).

As shown in FIG. 5A, the first machined front insulation plate 60a has a first machined insulation plate hole 55g configured to receive a thermocouple 96 (see FIG. 2D), and a plurality of first machined insulation plate holes 55g for insertion of a portion of the heater elements 74, such as the cartridge heaters 76, so that the heater elements 74 can extend into the heater block openings 65 (see FIG. 5B), such as the lower machined heater block openings 65a (see FIG. 5B), of the lower machined heater block 64a, which is attached to the first machined insulation plates 60, such as the lower machined insulation plates 62. FIG. 5A shows the heater elements 74, such as the cartridge heaters 76, extending from the first machined heater block 64, such as the lower machined heater block 64a, through the first machined insulation plate holes 55g, and extending from the first machined front insulation plate 60a. The heater elements 74, such as the cartridge heaters 76, are configured to connect to the controller 85 (see FIG. 2A) and to the power supply 86 (see FIG. 2A).

As shown in FIG. 5A, one of the first machined end insulation plates 60c has a first machined insulation plate hole 55g with an attachment element 54, such as a shoulder screw 54c. FIG. 5A further shows a ring terminal 53 coupled to, and inserted in, the same first machined end insulation plate 60c. As shown in FIG. 5A, the ring terminal 53 has a shoulder screw 54c at an exterior end and a grounding screw 54d at an interior end.

The machined insulation plates 56, such as the first machined insulation plates 60, are preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the first machined insulation plates 60, may also be made of carbon-ceramic matrix, carbon-carbon composite materials, or other suitable materials.

Now referring to FIG. 5B, FIG. 5B is an illustration of a front perspective view the machined heater block 58, such as the first machined heater block 64, for example, the lower machined heater block 64a, or bottom machined heater block, of the first heater assembly 50, such as the lower heater assembly 50a, of FIG. 5A. As shown in FIG. 5B, the machined heater block 58, such as the first machined heater block 64, for example, the lower machined heater block 64a, or bottom machined heater block, has six (6) sides 63 comprising a front side 63a, a back side 63b, a top side 63c, a bottom side 63d, a first end side 63e, and a second end side 63f. The first machined heater block 64 preferably has a rectangular shape or another suitable geometric shape.

As shown in FIG. 5B, in one version, the front side 63a of the first machined heater block 64 has heater block openings 65, such as lower machined heater block openings 65a. In one version, as shown in FIG. 5B, the front side 63a has five (5) heater block openings 65, each configured to receive a portion of a heater element 74 (see FIG. 5A), such as a cartridge heater 76 (see FIG. 5A). In other versions, the front side 63a may have more than five (5) heater block openings 65.

As shown in FIG. 5B, in one version, the front side 63a further has a first machined heater block hole 55h positioned above the lower machined heater block openings 65a, and configured to receive a thermocouple 96 (see FIG. 2C). As shown in FIG. 5B, in one version, the front side 63a further has a first machined heater block hole 55h positioned in a corner below the lower machined heater block openings 65a, and configured to receive an attachment element 54, such as a grounding screw 54d (see FIG. 5A). As shown in FIG. 5B, in one version, the front side 63a further has a first machined heater block hole 55h positioned below the lower machined heater block openings 65a, and configured to receive an attachment element 54, such as a shoulder screw 54c (see FIG. 2F), or other suitable attachment elements 54, to attach the first machined front insulation plate 60a (see FIG. 5A) to the front side 63a of the first machined heater block 64. Similarly, the back side 63b has one or more first machined heater block holes 55h configured to receive attachment elements 54, such as shoulder screws 54c (see FIG. 5A), or other suitable attachment elements 54, to attach the first machined back insulation plate 60b (see FIG. 5A) to the back side 63b of the first machined heater block 64.

As shown in FIG. 5B, in one version, the bottom side 63d has four (4) first machined heater block holes 55h configured to receive attachment elements 54 (see FIG. 5A), such as shoulder screws 54c (see FIGS. 2F, 5A), or other suitable attachment elements 54, to attach the first machined bottom insulation plate 60d (see FIG. 5A) to the bottom side 63d. As shown in FIG. 5B, in one version, the first end side 63e has a first machined heater block hole 55h configured to receive an attachment element 54 (see FIG. 5A), such as a shoulder screw 54c (see FIG. 5A), or other suitable attachment element 54, to attach one of the first machined end insulation plates 60c (see FIG. 5A) to the first end side 63e. Similarly, the second end side 63f (see FIG. 5B) has another first machined end insulation plate 60c attached to the second end side 63f, via an attachment element 54, such as a shoulder screw 54c, or another suitable attachment element 54.

The machined heater block 58, such as the first machined heater block 64, is preferably made of a metal material 72 (see FIG. 1). Preferably, the metal material 72 comprises, as shown in FIG. 1, stainless steel 72a, steel 72b, aluminum 72c, carbon steel 72d, aluminum bronze 72e, or another suitable metal material 72. The machined heater block 58 may also be made of another suitable material.

The machined heater block 58, such as the first machined heater block 64, for example, the lower machined heater block 64a, or bottom machined heater block, of the first heater assembly 50, such as the lower heater assembly 50a, conducts heat 30 (see FIG. 1) from the heater elements 74 (see FIG. 5A), such as the cartridge heaters 76 (see FIG. 5A), to the thermoplastic composite parts 24 (see FIG. 2F). The machined heater block 58, such as the first machined heater block 64, for example, the lower machined heater block 64a, or bottom machined heater block, is fastened to the spacer plate 162, such as the bottom spacer plate 162a (see FIGS. 2D, 2G), and is also fastened to the bottom heater angle portions 156b (see FIGS. 2D, 2G), via attachment elements 54, such as shoulder screws 54c (see FIGS. 2D, 2G), or other suitable attachment elements 54.

Now referring to FIG. 6, FIG. 6 is an illustration of a right side perspective view of an exemplary version of a support frame assembly 16 of the portable conduction welding apparatus 10 of FIG. 2A. As shown in FIG. 6, the support frame assembly 16 has a lower portion 140a and an upper portion 140b. As shown in FIG. 6, the support frame assembly 16 further comprises a support frame plate 142, such as a C-shaped support frame plate 142a, having a lower end 144a and an upper end 144b. As shown in FIG. 6, in one version, the support frame plate 142, such as a C-shaped support frame plate 142a, has a body 146 with a profile 150, such as a C-shaped profile 150a. The profile 150 may also be a U-shaped profile or another suitable profile shape. As shown in FIG. 6, the support frame plate 142, such as the C-shaped support frame plate 142a, has a plurality of cut-out openings 148 formed through the body 146. The cut-out openings 148 are designed to lighten or decrease the weight of the support frame plate 142, and in turn, to lighten or decrease the overall weight of the support frame assembly 16. The profile 150, such as the C-shaped profile 150a, also referred to as the throat, may be enlarged if needed.

The support frame plate 142, such as the C-shaped support frame plate 142a, provides the reaction force 154 (see FIG. 1) during thermoplastic welding 20 (see FIG. 1), such as conduction welding 22 (see FIG. 1). The support frame plate 142, such as the C-shaped support frame plate 142a, also couples or connects the first heater assembly 50 (see FIG. 2A), such as the lower heater assembly 50a (see FIG. 2A), to the second heater assembly 52 (see FIG. 2A), such as the upper heater assembly 52a (see FIG. 2A). Preferably, the support frame plate 142, such as the C-shaped support frame plate 142a, is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As shown in FIG. 6, the support frame assembly 16 further comprises a plurality of support angle portions 156 attached to the lower end 144a of the support frame plate 142. As shown in FIG. 6, the support angle portions 156 comprise foot angle portions 156a, each with an angled shape 158, attached or fastened at the bottom of each side of the lower end 144a of the support frame plate 142, via attachment elements 54, such as cap screws 54b, or other suitable attachment elements 54. FIG. 6 shows, in one version, two (2) foot angle portions 156a. However, in other versions, more than two (2) foot angle portions 156a may be used. As shown in FIG. 6, the foot angle portions 156a are attached to the lower end 144a, or base, of the support frame plate 142, to orient and support the support frame assembly 16 in an upright orientation 160. Preferably, the foot angle portions 156a are made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As further shown in FIG. 6, the support angle portions 156 further comprise bottom heater angle portions 156b, each with an angled shape 158, attached or fastened above the foot angle portions 156a on each side of the lower end 144a of the support frame plate 142, via attachment elements 54, such as cap screws 54b, or other suitable attachment elements 54. FIG. 6 shows, in one version, two (2) bottom heater angle portions 156b. However, in other versions, more than two (2) bottom heater angle portions 156b may be used. The bottom heater angle portions 156b support and set a flat orientation of the first heater assembly 50 (see FIG. 2A), such as the lower heater assembly 50a (see FIG. 2A). As shown in FIG. 6, the bottom heater angle portions 156b further have roll pins 159 inserted through the bottom heater angle portions 156b and positioned to the side of each cap screw 54b. The roll pins 159 are designed to ensure precise alignment of the bottom heater angle portions 156b to enable a fully flat surface. Preferably, the bottom heater angle portions 156b are made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As shown in FIG. 6, the support frame assembly 16 further comprises a spacer plate 162, such as a bottom spacer plate 162a, is attached to at least two (2) of the plurality of support angle portions 156, such as two (2) bottom heater angle portions 156b. As shown in FIG. 6, each of the bottom heater angle portions 156b is coupled, or attached, to the spacer plate 162, such as the bottom spacer plate 162a, via attachment elements 54, inserted through spacer plate openings 166. As shown in FIG. 6, the spacer plate 162, such as the bottom spacer plate 162a, enables a surface area 164, such as a large surface area 164a, for the reaction force 154 (see FIG. 1). The spacer plate 162, such as the bottom spacer plate 162a, also adds added surface area 164b (see FIG. 6) for thermal isolation 126 (see FIG. 1). Preferably, the spacer plate 162, such as the bottom spacer plate 162a, is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

As shown in FIG. 6, the support frame assembly 16 further comprises an actuator mating plate 168 attached to the upper end 144b of the support frame plate 142, via cap screws 54b, or other suitable attachment elements 54. The actuator mating plate 168 also comprises actuator mating plate openings 170 (see FIG. 6) configured for inserting cap screws 54b (see FIG. 2B) to attach the actuator mating plate 168 to the mounting brackets 180 (see FIG. 2B), such as the first mounting bracket 180a (see FIG. 2B), and the second mounting bracket 180b (see FIG. 2B) of the linear pneumatic actuator assembly 172. The actuator mating plate 168 enables attachment to the linear pneumatic actuator assembly 172. As shown in FIG. 6, the actuator mating plate 168 also comprises roll pin openings 171 for receiving roll pins 159. Preferably, the actuator mating plate 168 is made of a metal material 72 (see FIG. 1), such as stainless steel 72a (see FIG. 1), steel 72b (see FIG. 1), aluminum 72c (see FIG. 1), carbon steel 72d (see FIG. 1), aluminum bronze 72e (see FIG. 1), or another suitable metal material 72.

Now referring to FIG. 7A, FIG. 7A is an illustration of a right side perspective view of an exemplary air pressure assembly 18 of an exemplary portable conduction welding apparatus 10 (see FIGS. 2A-2B) of the disclosure. The air pressure assembly 18 (see FIG. 7A) is configured to apply a force 106 (see FIG. 1) during the conduction welding 22 (see FIG. 1).

The air pressure assembly 18 comprises an air regulator assembly 204 (see FIG. 7A). As shown in FIG. 7A, in one version, the air regulator assembly 204 comprises an air regulator 206, a pressure gauge 207 attached to the air regulator 206, and a knob 213, such as a pressure regulating knob 213a, attached to a support angle portion 156, such as an air regulator angle portion 156c, having an angled shape 158, and configured to attach, and attaching, the air regulator assembly 204 to the lower portion 140a (see FIG. 2A) of the support frame assembly 16 (see FIG. 2A), via attachment elements 54, such as cap screws 54b, or other suitable attachment elements 54.

As shown in FIG. 7A, the air regulator assembly 204 further comprises one or more elbow fittings 202, such as an air regulator elbow fitting 202d, attached to the air regulator 206. As shown in FIG. 7A, the air regulator assembly 204 further comprises a quick-disconnect coupling 208 attached to the air regulator 206, and having an air inlet 210, such as a shop air inlet 210a, configured to receive air 212a, such as pressurized air 212b, for example, shop air or compressed air, from an air supply 212.

The air regulator assembly 204 is configured to receive air 212a (see FIG. 7A), such as pressurized air 212b (see FIG. 7A), for example, shop air or compressed air, from an air supply 212 (see FIG. 7A), via an air hose line 196, such as a first air hose line 196a. The air regulator assembly 204 is further configured to regulate the pressure of the air 212a, such as the pressurized air 212b, for example, shop air, with the pressure gauge 207 (see FIG. 7A) attached to the air regulator 206 (see FIG. 7A), and with the pressure regulating knob 213a (see FIG. 7A), attached to the support angle portion 156 (see FIG. 7A) and also attached to the air regulator 206.

As shown in FIG. 7A, the air pressure assembly 18 further comprises a directional air valve assembly 194 that is configured to receive the air flow 192 (see FIG. 1) from the air regulator assembly 204, via an air hose line 196, such as a second air hose line 196b, and is configured to control the air flow 192 to the linear pneumatic actuator assembly 172.

As shown in FIG. 7A, the directional air valve assembly 194 comprises a directional air valve 198, such as a directional air control valve 198a, and a plurality of mufflers 200, such as a first muffler 200a and a second muffler 200b, both attached to the directional air valve 198. The mufflers 200, such as the first muffler 200a and the second muffler 200b, are configured to attenuate or decrease any sound emanating from the directional air valve 198.

As shown in FIG. 7A, the directional air valve assembly 194 further comprises a plurality of elbow fittings 202 attached to the directional air valve 198. In one version, as shown in FIG. 7A, the plurality of elbow fittings 202 comprise a first directional air valve elbow fitting 202a, a second directional air valve elbow fitting 202b, and a third directional air valve elbow fitting 202c. As shown in FIG. 7A, the directional air valve assembly 194 further comprises a knob 203, such as an air flow control knob 203a, attached to the directional air valve 198. As shown in FIG. 7A, the directional air valve assembly 194 further comprises attachment elements 54, such as cap screws 54b, attached to the directional air valve 198.

As shown in FIG. 7A, the air pressure assembly 18 further comprises a linear pneumatic actuator assembly 172 comprising a housing 174 with an interior 176a, an exterior 176b, a first portion 178a, and a second portion 178b. As shown in FIG. 7A, the housing 174 further comprises mounting brackets 180, such as a first mounting bracket 180a and a second mounting bracket 180b, each having mounting bracket holes 55c (see also FIG. 2E) configured to receive cap screws 54b (see FIG. 2E) for attaching the mounting brackets 180 to the actuator mating plate 168 (see FIGS. 2D, 6) of the support frame assembly 16 (see FIG. 6). As shown in FIG. 7A, the mounting brackets 180 are attached to the first portion 178a of the housing 174 with attachment elements 54, such as shoulder screws 54c, or other suitable attachment elements 54.

As shown in FIG. 7A, the housing 174 further has a plurality of guide members 186 (see also FIG. 2F) coupled to the interior 176a (see also FIG. 2F) of the housing 174. The linear pneumatic actuator 182 (see FIG. 7A), comprising a guided air cylinder 184 (see FIG. 7A), is coupled to the plurality of guide members 186, and moves up and down along the guide members 186 from the retracted position 185a (see FIGS. 2D, 2G) to the extended position 185b (see FIG. 2F) and back to the retracted position 185a. The linear pneumatic actuator 182, such as the guided air cylinder 184, is configured to extend with an air supply 212 (see FIG. 7A) of air 212a (see FIG. 7A), such as pressurized air 212b (see FIG. 7A), or is configured to retract when pushed to retract.

As shown in FIG. 7A, a plurality of air flow ports 190, such as an air flow inlet port 190a, and an air flow inlet port 190b, are coupled to the first portion 178a of the housing 174. The plurality of air flow ports 190 are configured to engage and disengage the linear pneumatic actuator 182. In one version, as shown in FIG. 7A, the air flow inlet port 190a is positioned at the bottom portion of the first portion 178a of the housing 174, and the air flow inlet port 190b is positioned at the top portion of the first portion 178a of the housing 174. In another version, the positions may be reversed, and the air flow inlet port 190a is positioned at the top portion of the first portion 178a of the housing 174, and the air flow inlet port 190b is positioned at the bottom portion of the first portion 178a of the housing 174. As further shown in FIG. 7A, the air flow inlet port 190a has an air opening 191, such as an air inlet opening 191a, and the air flow inlet port 190b has an air opening 191, such as an air inlet opening 191b. As shown in FIG. 7A, the second portion 178b of the housing 184 has side supports 181 and a base 188.

As shown in FIG. 7A, the air pressure assembly 18 may further comprise a plurality of air hose lines 196. As shown in FIG. 7A, in one version, the plurality of air hose lines 196 may comprise a first air hose line 196a connecting the air supply 212 of air 212a, such as pressurized air 212b, for example, shop air, to the air inlet 210, such as the shop air inlet 210a, of the quick-disconnect coupling 208 of the air regulator assembly 204. As shown in FIG. 7A, in one version, the plurality of air hose lines 196 may further comprise a second air hose line 196b connecting the elbow fitting 202, such as the air regulator elbow fitting 202d, of the air regulator assembly 204, to the elbow fitting 202, such as the first directional air valve elbow fitting 202a, of the directional air valve assembly 194.

As shown in FIG. 7A, in one version, the plurality of air hose lines 196 may further comprise a third air hose line 196c connecting the elbow fitting 202, such as the second directional air valve elbow fitting 202b, of the directional air valve assembly 194, to the air opening 191, such as the air inlet opening 191a, of the air flow port 190, such as the air flow inlet port 190a, of the linear pneumatic actuator assembly 172. As shown in FIG. 7A, in one version, the plurality of air hose lines 196 may further comprise a fourth air hose line 196d connecting the elbow fitting 202, such as the third directional air valve elbow fitting 202c, of the directional air valve assembly 194, to the air opening 191, such as the air inlet opening 191b, of the air flow port 190, such as the air flow inlet port 190b, of the linear pneumatic actuator assembly 172.

In one version, when activated, the air 212a (see FIG. 7A), such as the pressurized air 212b (see FIG. 7A), for example, shop air or compressed air, from the air supply 212 (see FIG. 7A) is delivered through the first air hose line 196a, through the air regulator assembly 204, through the second air hose line 196b, through the directional air valve assembly 194, through the fourth air hose line 196d, into the air flow inlet port 190b of the linear pneumatic actuator assembly 172, and through the linear pneumatic actuator assembly 172, to extend the linear pneumatic actuator 182 (see FIG. 2F) in a downward direction 187a (see FIG. 2F), against the first heater assembly 50, against the thermoplastic composite parts 24, and against the second heater assembly 52. The air flow inlet port 190b is the port which extends the linear pneumatic actuator 182 (see FIG. 7A), such as the guided air cylinder 184 (see FIG. 7A), when air 212a, such as pressurized air 212b, enters. The pressure of the guided air cylinder 184 is maintained as long as air pressure is coming through the air flow inlet port 190b. When the air 212a, such as the pressurized air 212b, is turned off by the directional air valve 198, of the directional air valve assembly 194, some air 212a, such as pressurized air 212b, exits the linear pneumatic actuator 182, such as the guided air cylinder 184, preferably back through the air flow inlet port 190b and back into the directional air valve 198 of the directional air valve assembly 194. There is no suction pump in the air pressure assembly 18. When the linear pneumatic actuator 182, such as the guided air cylinder 184, is retracted, the air flow 192 to the air flow inlet port 190b is changed to the air flow inlet port 190a, from the directional air valve assembly 194, via the third air hose line 196c. Inside the linear pneumatic actuator 182, such as the guided air cylinder 184, is a plate to which the piston 183a (see FIG. 2F), or actuator rod, of the linear pneumatic actuator 182, such as the guided air cylinder 184, is attached. Depending on which side of the plate has pressurized air 212b dictates the direction of movement of the piston 183a, or actuator rod. The linear pneumatic actuator 182, such as the guided air cylinder 184, is either pushed to extend through air flow inlet port 190b, or pushed to retract through air flow inlet port 190a. The directional air valve assembly 194 has a first muffler 200a (FIG. 7A) and a second muffler 200b (see FIG. 7A) with discharge ports to exhaust excess air pressure since these discharge ports are where excess air pressure is discharged and would be very loud without the first muffler 200a and the second muffler 200b. Any excess air 212a, such as pressurized air 212b, exits or exhausts via discharge ports in the directional air valve assembly 194.

The linear pneumatic actuator 182, such as the guided air cylinder 184, is configured to move, and moves, between the retracted position 185a (see FIGS. 2D, 2G) and the extended position 185b (see FIG. 2F). Once the welding process 23 comprising the thermoplastic welding 20, for example, the conduction welding 22, and the thermal welding cycle 75 are complete, the air 212a, such as the pressurized air 212b, for example, shop air or compressed air, is turned off, and the linear pneumatic actuator 182, such as the guided air cylinder 184, moves from the extended position 185b back to the retracted position 185a.

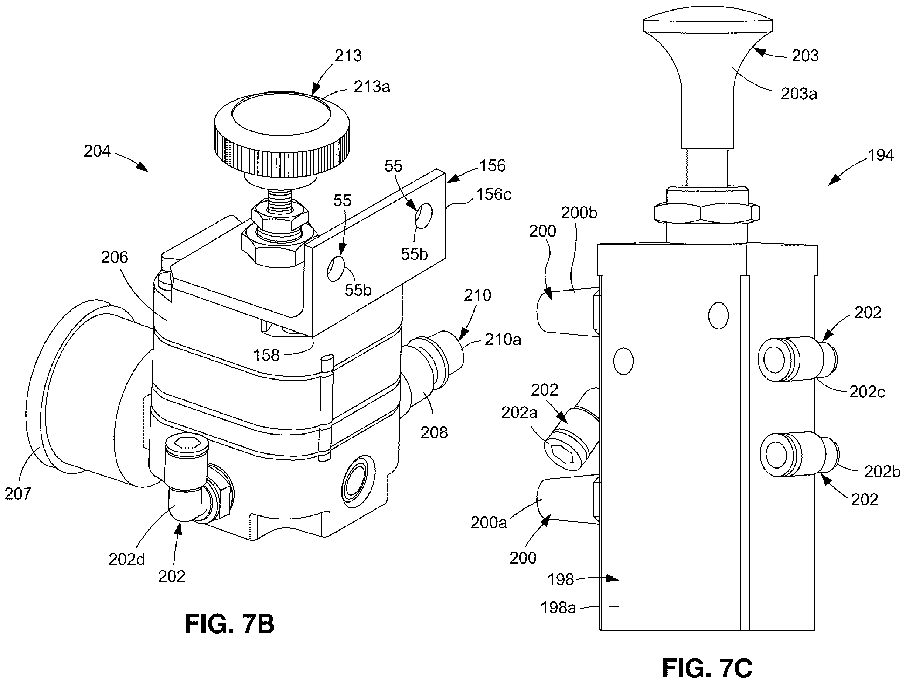

Now referring to FIG. 7B, FIG. 7B is an illustration of a back perspective view of an exemplary air regulator assembly 204 of the air pressure assembly 18, of FIG. 7A. The air regulator assembly 204 comprises an air regulator 206 (see FIG. 7B), and is configured to receive air 212a (see FIG. 7A), such as pressurized air 212b (see FIG. 7A), from an air supply 212 (see FIG. 7A), and is configured to regulate the pressure of the air 212a, such as the pressurized air 212b, with a pressure gauge 207 (see FIG. 7B) attached to the air regulator 206, and with a knob 213 (see FIG. 7B), such as a pressure regulating knob 213a (see FIG. 7B), attached to a support angle portions 156 (see FIG. 2B) and also attached to the air regulator 206.

As shown in FIG. 7B, the air regulator assembly 204 comprises the support angle portion 156, such as an air regulator angle portion 156c, configured to attach, and attaching, the air regulator assembly 204 to the lower portion 140a (see FIG. 2A) of the support frame assembly 16 (see FIG. 2A). The support angle portion 156, such as the air regulator angle portion 156c, has support angle holes 55b for attachment elements 54, such as cap screws 54b (see FIG. 2D), to attach the air regulator angle portion 156c of the air regulator assembly 204 to the support frame assembly 16.

As shown in FIG. 7B, the air regulator assembly 204 further comprises a quick-disconnect coupling 208 attached to the air regulator 206, and having an air inlet 210, such as a shop air inlet 210a, configured to receive air 212a, such as pressurized air 212b, for example, shop air. As shown in FIG. 7B, the air regulator assembly 204 further comprises one or more elbow fittings 202 attached to the air regulator 206. In one version, as shown in FIG. 7B, the elbow fitting 202 comprises an air regulator elbow fitting 202d.

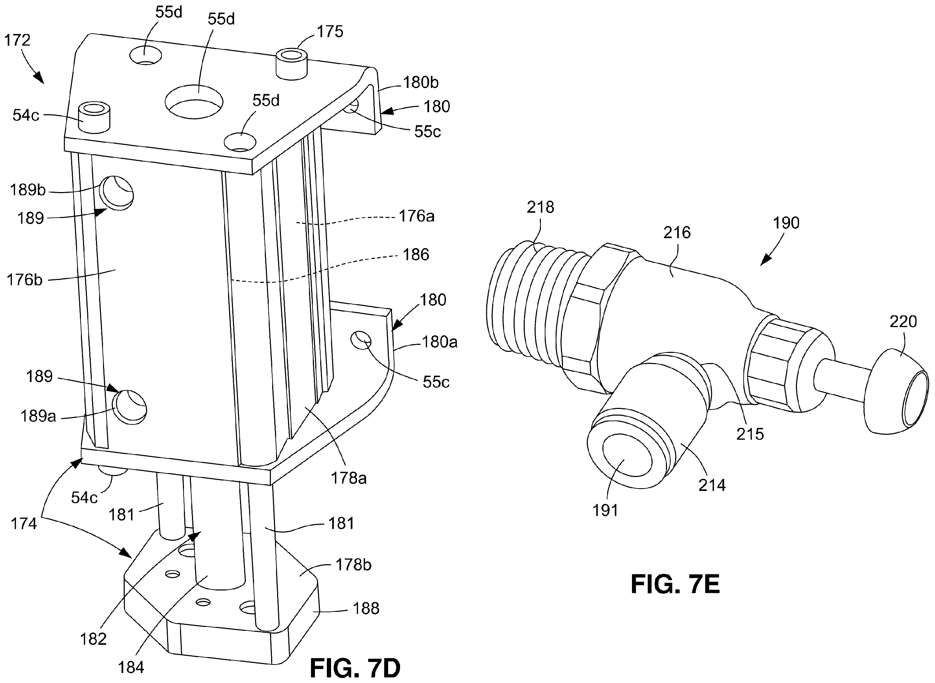

Now referring to FIG. 7C, FIG. 7C is an illustration of a right side perspective view of an exemplary directional air valve assembly 194 of the air pressure assembly 18, of FIG. 7A. The directional air valve assembly 194 is configured to receive an air flow 192 (see FIG. 1) from the air regulator assembly 204 (see FIGS. 7A, 7B), and is configured to control the air flow 192 of air 212a, such as pressurized air 212b, to the linear pneumatic actuator assembly 172 (see FIGS. 7A, 7D). The directional air valve assembly 194 is also configured to exhaust air flow 192 of air 212a, such as pressurized air 212b, from the linear pneumatic actuator assembly 172.

As shown in FIG. 7C, the directional air valve assembly 194 comprises the directional air valve 198, such as a directional air control valve 198a. As shown in FIG. 7C, the directional air valve assembly 194 further comprises the plurality of mufflers 200, such as a first muffler 200a and a second muffler 200b, attached to the directional air valve 198.

As shown in FIG. 7C, the directional air valve assembly 194 further comprises a plurality of elbow fittings 202 attached to the directional air valve 198. In one version, as shown in FIG. 7C, the plurality of elbow fittings 202 comprise a first directional air valve elbow fitting 202a, a second directional air valve elbow fitting 202b, and a third directional air valve elbow fitting 202c. As shown in FIG. 7C, the directional air valve assembly 194 further comprises a knob 203, such as an air flow control knob 203a, attached to the directional air valve 198.

Now referring to FIG. 7D, FIG. 7D is an illustration of a front perspective view of an exemplary linear pneumatic actuator assembly 172 of the air pressure assembly 18, of FIG. 7A. As shown in FIG. 7D, the linear pneumatic actuator assembly 172 comprises the housing 174. As shown in FIG. 7D, the housing 174 comprises an interior 176a, an exterior 176b, a first portion 178a, and a second portion 178b. As shown in FIG. 7D, the housing 174 further comprises mounting brackets 180, such as the first mounting bracket 180a and the second mounting bracket 180b, having mounting bracket holes 55c configured for receiving cap screws 54b (see FIG. 2E) for attaching the mounting brackets 180 to the actuator mating plate 168 of the support frame assembly 16 (see FIG. 6), and further having mounting bracket top holes 55d formed in the top of the second mounting bracket 180b that may be used to attach the second mounting bracket 180b to the linear pneumatic actuator 182, such as the guided air cylinder 184. As shown in FIG. 7D, the mounting brackets 180 are attached to the first portion 178a of the housing 174 with shoulder screws 54c. However, other suitable attachment elements 54 may be used.

The interior 176a of the first portion 178a of the housing 174 has a plurality of guide members 186 (see FIG. 7D) coupled to the interior 176a of the housing 174. The linear pneumatic actuator 182 (see FIG. 7D), such as the guided air cylinder 184 (see FIG. 7D), is coupled to the plurality of guide members 186, and moves up and down along the guide members 186 from the retracted position 185a (see FIGS. 2D, 2G) to the extended position 185b (see FIG. 2F) and back to the retracted position 185a.

As shown in FIG. 7D, the second portion 178b of the housing 184 has side supports 181 and a base 188. Air flow ports 190 (see FIG. 7A) are coupled to the housing 174 by insertion into air flow port openings 189 (see FIG. 7D), such as a first air flow port opening 189a (see FIG. 7D) and a second air flow port opening 189b (see FIG. 7D), formed in the first portion 178a of the housing 174.

Now referring to FIG. 7E, FIG. 7E is an illustration of a front perspective view of an exemplary air flow port 190, such as an air flow inlet port 190a (see FIG. 7A), or an air flow inlet port 190b (see FIG. 7A), of the linear pneumatic actuator assembly 172 of FIG. 7A. As shown in FIG. 7E, the air flow port 190 comprises an air hose line connector portion 214 with an air opening 191, such as an air inlet opening 191a (see FIG. 7A), or an air inlet opening 191b (see FIG. 7A), and an end 215 coupled to a body 216 of the air flow port 190. As shown in FIG. 7E, the air flow port 190 further comprises a connector end 218 configured for insertion into, and connection to, the air flow port opening 189 (see FIG. 7D), such as the first air flow port opening 189a (see FIG. 7D), or the second air flow port opening 189b (see FIG. 7D). As shown in FIG. 7E, the air flow port 190 further comprises an adjustment knob 220 configured to control a rate of air flow 192 (see FIG. 1) through the air flow port 190 or fitting.

Now referring to FIG. 8, FIG. 8 is an illustration of a front perspective view of an exemplary version of a portable conduction welding system 12 of the disclosure. The portable conduction welding system 12, as shown in FIG. 8, includes an exemplary version of a portable conduction welding apparatus 10, such as a compact portable conduction welding apparatus 10b, in a disassembled configuration 11b, and packed in an exemplary version of a carrying case 14, such as a suitcase 14a. As shown in FIG. 8, the portable conduction welding apparatus 10 in the disassembled configuration 11b is packed, or stored, and secured, in an interior 15 of the carrying case 14, such as the suitcase 14a. FIG. 8 shows the portable conduction welding apparatus 10 with the support frame assembly 16 having the support frame plate 142, such as the C-shaped support frame plate 142a. FIG. 8 further shows the air pressure assembly 18 having the linear pneumatic actuator assembly 172, the directional air valve assembly 194, and the air regulator assembly 204. FIG. 8 further shows the heating system 46 having the first heater assembly 50, the second heater assembly 52, the heater elements 74 and thermocouples 96 in a first container 222a, and the controller 85 and power supply 86 in a second container 222b. The carrying case 14, such as the suitcase 14a, is handheld and can be easily transported from one location to another location.

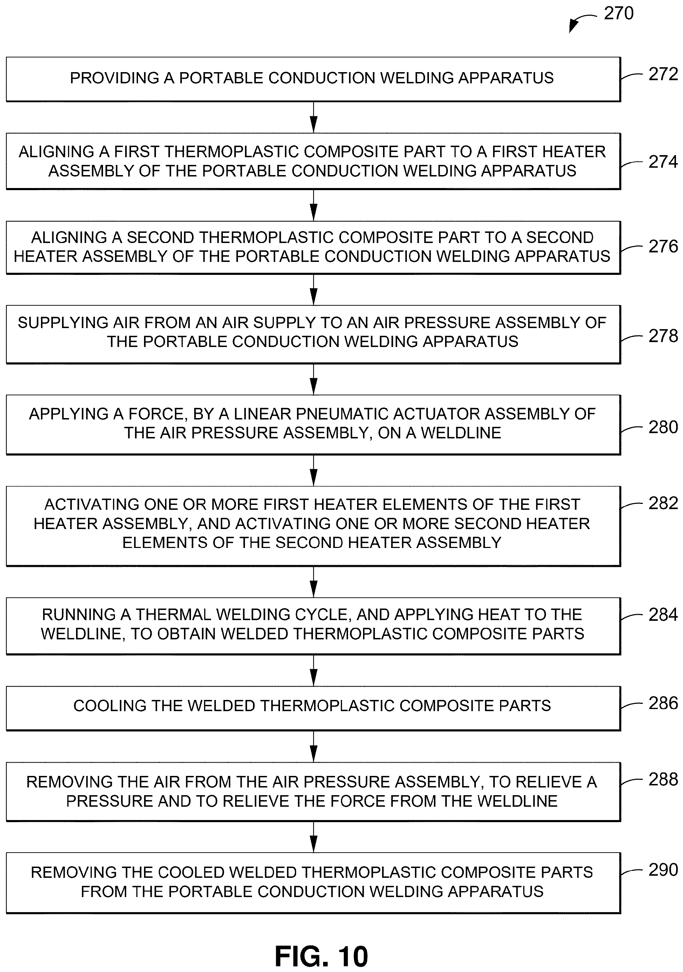

Now referring to FIG. 9A, FIG. 9A is an illustration of a perspective view of an exemplary version of two (2) welded thermoplastic composite parts 24c welded together using an exemplary version of the portable conduction welding apparatus 10 (see FIGS. 1-2F) and the method 270 (see FIG. 10) of the disclosure. FIG. 9A shows a first thermoplastic composite part 24a comprising a thermoplastic composite aircraft part 44, in the form of a panel 44e, and shows a second thermoplastic composite part 24b comprising a thermoplastic composite aircraft part 44, in the form of a bracket 44b. As shown in FIG. 9A, the panel 44e and the bracket 44b are welded together at the weldline 28a, or bondline 28b. The first contact interface 26a (see FIG. 9A) of the panel 44e and the second contact interface 26b (see FIG. 9A) of the bracket 44b are welded together. Each of the panel 44e and the bracket 44b are made of thermoplastic composite material 25 (see FIG. 9A).

Now referring to FIG. 9B, FIG. 9B is an illustration of a perspective view of another exemplary version of two (2) welded thermoplastic composite parts 24c welded together using an exemplary version of a portable conduction welding apparatus 10 (see FIGS. 1-2F) and a method 270 (see FIG. 10) of the disclosure. FIG. 9B shows a first thermoplastic composite part 24a comprising a thermoplastic composite laminate 38, such as a first thermoplastic composite laminate 38a, and shows a second thermoplastic composite part 24b comprising a thermoplastic composite laminate 38, such as a second thermoplastic composite laminate 38b. As shown in FIG. 9B, the first thermoplastic composite laminate 38a and the second thermoplastic composite laminate 38b are welded together at the weldline 28a, or bondline 28b, and form a lap joint 29. The first contact interface 26a (see FIG. 9B) of the first thermoplastic composite laminate 38a and the second contact interface 26b (see FIG. 9B) of the second thermoplastic composite laminate 38b are welded together. Each of the first thermoplastic composite laminate 38a and the second thermoplastic composite laminate 38b are made of thermoplastic composite material 25 (see FIG. 9B).

Now referring to FIG. 10, FIG. 10 is an illustration of a flow diagram of an exemplary version of a method 270 of the disclosure. In another version of the disclosure, there is provided the method 270 of using a portable conduction welding apparatus 10 (see FIGS. 1, 2A-2B), such as a portable conduction welding tool 10a (see FIGS. 1, 8), for thermoplastic welding 20 (see FIG. 1), such as conduction welding 22 (see FIG. 1) of thermoplastic composite parts 24 (see FIGS. 1, 2F, 9A-9B). The blocks in FIG. 10 represent operations and/or portions thereof, or elements, and lines connecting the various blocks do not imply any particular order or dependency of the operations or portions thereof, or elements. FIG. 10 and the disclosure of the steps of the method 270 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 10, the method 270 comprises the step of providing 272 the portable conduction welding apparatus 10. As discussed in detail above, the portable conduction welding apparatus 10 comprises the support frame assembly 16 (see FIGS. 1, 2A-2B, 6) having the lower portion 140a (see FIG. 6) and the upper portion 140b (see FIG. 6). As shown in FIG. 6, the support frame assembly 16 may further comprise the support frame plate 142, such as the C-shaped support frame plate 142a, having the lower end 144a and then upper end 144b, the plurality of support angle portions 156 attached to the lower end 144a of the support frame plate 142, the spacer plate 162 attached to at least two (2) of the plurality of support angle portions 156, and then actuator mating plate 168 attached to the upper end 144b of the support frame plate 142.

The portable conduction welding apparatus 10 further comprises the air pressure assembly 18 (see FIGS. 2A-2B, 7A) configured to apply a force 106 (see FIG. 1) during the conduction welding 22 (see FIG. 1). The air pressure assembly 18 comprises the linear pneumatic actuator assembly 172 (see FIG. 7A) coupled, or attached, to the upper portion 140b of the support frame assembly 16. In one version, as shown in FIGS. 2F, 7A, the linear pneumatic actuator assembly 172 comprises the housing 174 with mounting brackets 180 attached to the support frame assembly 16, the plurality of guide members 186 coupled to the interior 176a of the housing 174, the linear pneumatic actuator 182 coupled to the plurality of guide members 186, and the plurality of air flow ports 190 coupled to the housing 174. The linear pneumatic actuator 182 preferably comprises the guided air cylinder 184 (see FIG. 2F), and is configured to extend with the air supply 212 (see FIG. 7A) of air 212a (see FIG. 7A), such as pressurized air 212b (see FIG. 7A), or configured to retract when pushed to retract. The plurality of air flow ports 190 are configured to engage and disengage the linear pneumatic actuator 182.

As shown in FIG. 7A, the air pressure assembly 18 further comprises the directional air valve assembly 194 configured to control the air flow 192 (see FIG. 1) to the linear pneumatic actuator assembly 172. In one version, as shown in FIG. 7A, the directional air valve assembly 194 comprises the directional air valve 198, the plurality of mufflers 200 attached to the directional air valve 198 and configured to attenuate sound emanating from the directional air valve 198, and the plurality of elbow fittings 202 attached to the directional air valve 198.

The air pressure assembly 18 further comprises the air regulator assembly 204 (see FIG. 7A). As shown in FIG. 7A, in one version, the air regulator assembly 204 comprises the air regulator 206, the pressure gauge 207 attached to the air regulator 206, the air regulator angle portion 156c attaching the air regulator assembly 204 to the lower portion 140a of the support frame assembly 16, a quick-disconnect coupling 208 attached to the air regulator 206, and one or more elbow fittings 202 attached to the air regulator 206.

As shown in FIG. 7A, the air pressure assembly 18 may further comprise the plurality of air hose lines 196. As shown in FIG. 7A, in one version, the plurality of air hose lines 196 may comprise the first air hose line 196a connecting the air supply 212 of air 212a, such as pressurized air 212b, to the air inlet 210, such as the shop air inlet 210a, of the quick-disconnect coupling 208 of the air regulator assembly 204. As shown in FIG. 7A, in one version, the plurality of air hose lines 196 may further comprise the second air hose line 196b connecting the elbow fitting 202, such as the air regulator elbow fitting 202d, of the air regulator assembly 204, to the elbow fitting 202, such as the first directional air valve elbow fitting 202a, of the directional air valve assembly 194.

As shown in FIG. 7A, in one version, the plurality of air hose lines 196 may further comprise the third air hose line 196c connecting the elbow fitting 202, such as the second directional air valve elbow fitting 202b, of the directional air valve assembly 194, to the air opening 191, such as the air inlet opening 191a, of the air flow port 190, such as the air flow inlet port 190a, of the linear pneumatic actuator assembly 172. As shown in FIG. 7A, in one version, the plurality of air hose lines 196 may further comprise the fourth air hose line 196d connecting the elbow fitting 202, such as the third directional air valve elbow fitting 202c, of the directional air valve assembly 194 to the air opening 191, such as the air inlet opening 191b, of the air flow port 190, such as the air flow inlet port 190b, of the linear pneumatic actuator assembly 172.

In one version, when activated, the air 212a (see FIG. 7A), such as the pressurized air 212b (see FIG. 7A), for example, shop air or compressed air, from the air supply 212 (see FIG. 7A) is delivered through the first air hose line 196a, through the air regulator assembly 204, through the second air hose line 196b, through the directional air valve assembly 194, through the fourth air hose line 196d, into the air flow inlet port 190b of the linear pneumatic actuator assembly 172, and through the linear pneumatic actuator assembly 172, to extend the linear pneumatic actuator 182 (see FIG. 2F) in a downward direction 187a (see FIG. 2F), against the first heater assembly 50, against the thermoplastic composite parts 24, and against the second heater assembly 52. The air flow inlet port 190b is the port which extends the linear pneumatic actuator 182 (see FIG. 7A), such as the guided air cylinder 184 (see FIG. 7A), when air 212a, such as pressurized air 212b, enters. The pressure of the guided air cylinder 184 is maintained as long as air pressure is coming through the air flow inlet port 190b. When the air 212a, such as the pressurized air 212b, is turned off by the directional air valve 198, of the directional air valve assembly 194, some air 212a, such as pressurized air 212b, exits the linear pneumatic actuator 182, such as the guided air cylinder 184, preferably back through the air flow inlet port 190b and back into the directional air valve 198 of the directional air valve assembly 194. In one version, when the linear pneumatic actuator 182, such as the guided air cylinder 184, is retracted, the air flow 192 to the air flow inlet port 190b is changed to the air flow inlet port 190a, from the directional air valve assembly 194, via the third air hose line 196c. Inside the linear pneumatic actuator 182, such as the guided air cylinder 184, is a plate to which the piston 183a (see FIG. 2F), or actuator rod, of the linear pneumatic actuator 182, such as the guided air cylinder 184, is attached. Depending on which side of the plate has pressurized air 212b dictates the direction of movement of the piston 183a, or actuator rod. The linear pneumatic actuator 182, such as the guided air cylinder 184, is either pushed to extend through air flow inlet port 190b, or pushed to retract through air flow inlet port 190a. The directional air valve assembly 194 has the first muffler 200a (FIG. 7A) and the second muffler 200b (see FIG. 7A) with discharge ports to exhaust excess air pressure since these discharge ports are where excess air pressure is discharged and would be very loud without the first muffler 200a and the second muffler 200b. Any excess air 212a, such as pressurized air 212b, exits or exhausts via discharge ports in the directional air valve assembly 194.

The linear pneumatic actuator 182, such as the guided air cylinder 184, is configured to move, and moves, between the retracted position 185a (see FIGS. 2D, 2G) and the extended position 185b (see FIG. 2F). Once the welding process 23 comprising the thermoplastic welding 20, for example, the conduction welding 22, and the thermal welding cycle 75 are complete, the air 212a, such as the pressurized air 212b, for example, shop air or compressed air, is turned off.

The portable conduction welding apparatus 10 further comprises the heating system 46 (see FIGS. 2A-2B) comprising the first heater assembly 50 (see FIGS. 2A-2B) coupled, or attached, to the lower portion 140a of the support frame assembly 16. The first heater assembly 50 comprises the plurality of first machined insulation plates 60 (see FIG. 5A), and the first machined heater block 64 (see FIG. 5B) attached to the plurality of first machined insulation plates 60. The first heater assembly 50 further comprises one or more heater elements 74 (see FIG. 5A), such as one or more first heater elements 88 (see FIG. 5A), coupled to the first machined heater block 64. The first heater assembly 50 further comprises one or more thermocouples 96 (see FIG. 2A), such as one or more first thermocouples 98 (see FIG. 2A), for example, one or more lower thermocouples 98a, or bottom thermocouples, coupled to the first machined heater block 64. The thermocouple 96, such as the first thermocouple 98, for example, the lower thermocouple 98a, is configured to monitor, and monitors, a temperature 36 (see FIG. 1) of the heat 30 (see FIG. 1) applied and supplied by the one or more heater elements 74, such as the one or more first heater elements 88, to the first machined heater block 64.

The heating system 46 further comprises a second heater assembly 52 (see FIGS. 2A-2B) positioned opposite the first heater assembly 50, and coupled, or attached, to the linear pneumatic actuator assembly 172. The second heater assembly 52 comprises the plurality of second machined insulation plates 66 (see FIG. 3), the second machined heater block 68 (see FIG. 3) attached to the plurality of second machined insulation plates 66 (see FIG. 3), the dovetail connector plate 102 (see FIG. 3) attached to one or more of the plurality of second machined insulation plates 66, the silicone pressure pad 134 (see FIG. 3) coupled to the dovetail connector plate 102, and the air cylinder isolator plate 124 (see FIG. 3) coupled to the silicone pressure pad 134.

The second heater assembly 52 further comprises one or more heater elements 74 (see FIG. 3), such as one or more second heater elements 95 (see FIG. 3), coupled to the second machined heater block 68. The second heater assembly 52 further comprises one or more thermocouples 96 (see FIG. 3), such as one or more second thermocouples 100 (see FIG. 3), for example, one or more upper thermocouples 100a, or top thermocouples, coupled to the second machined heater block 68, such as the upper machined heater block 68a. The thermocouple 96, such as the second thermocouple 100, for example, the upper thermocouple 100a, is configured to monitor, and monitors, a temperature 36 (see FIG. 1) of the heat 30 (see FIG. 1) applied and supplied by the one or more heater elements 74, such as the one or more second heater elements 95, to the second machined heater block 68.

The machined insulation plates 56, such as the first machined insulation plates 60 and the second machined insulation plates 66, are preferably made of one or more ceramic materials 70 (see FIG. 1), such as aluminum nitride, aluminum nitride composite, aluminum oxide, aluminosilicate, magnesium silicate, boron nitride, beryllium oxide, silicate ceramics, and other carbides, nitrides, borides, and other suitable ceramic materials. Preferably, the one or more ceramic materials 70 are low thermal conductivity ceramic materials. The machined insulation plates 56, such as the first machined insulation plates 60 and the second machined insulation plates 66, may also be made of carbon-ceramic matrix, carbon-carbon composite materials, or other suitable materials.

Each machined heater block 58, such as the first machined heater block 64 and the second machined heater block 68, is preferably made of a metal material 72 (see FIG. 1). Preferably, the metal material 72 comprises, as shown in FIG. 1, stainless steel 72a, steel 72b, aluminum 72c, carbon steel 72d, aluminum bronze 72e, or another suitable metal material 72. The machined heater block 58 may also be made of another suitable material.

Each of the one or more heater elements 74, such as the one or more first heater elements 88, for example, the one or more lower heater elements 88a, and such as the one or more second heater elements 95, for example, the one or more upper heater elements 95a, comprises one or more cartridge heaters 76 (see FIGS. 1, 2A-2B). In one version, as shown in FIGS. 1, 3B-3C, each of the one or more heater elements 74 comprises a cartridge heater 76 having one or more heating wires 77 housed in a metal sleeve 80, or metal sheath, and attached to one or more lead wires 78. Each cartridge heater 76 is connected to one of the one or more controllers 85 (see FIGS. 2A-2B). Each cartridge heater 76 may further comprise insulation material, such as lead wire insulation material, and/or metal sleeve insulation material, to allow optimal heat transfer. The insulation material may comprise magnesium oxide, or another suitable insulation material.

Each cartridge heater 76 is preferably a resistance heater that provides electrical resistance heating 82 (see FIG. 1) through conduction 84 (see FIG. 1) from the one or more cartridge heaters 76 to the thermoplastic composite parts 24, and in particular, to the weldline 28a (see FIG. 3B), or bondline 28b (see FIG. 3B), of the thermoplastic composite parts 24 (see FIG. 3B) being welded together.

The portable conduction welding apparatus 10 further comprises one or more controllers 85 (see FIGS. 1, 2A-2B) having one or more power supplies 86 (see FIGS. 1, 2A-2B), to control and to power the portable conduction welding apparatus 10. As shown in FIGS. 1, 2A-3B, the portable conduction welding apparatus 10 further comprises one or more controllers 85 having one or more power supplies 86, such as one or more electrical power supplies 86a, to control and to power the portable conduction welding apparatus 10. In particular, the one or more controllers 85 and the one or more power supplies 86 control and power the one or more heater elements 74, such as the first heater elements 88, or lower heater elements 88a, and the second heater element 95, or upper heater element 95a, the thermocouples 96, such as the first thermocouple 98, or lower thermocouple 98a, and the second thermocouple 100, or upper thermocouple 100a. One or more connector elements 90 (see FIGS. 2A-2B), such as one or more electrical wires 92 (see FIGS. 1, 2A-2B), one or more plugs 94 (see FIGS. 1, 2A-2B), or other suitable connector elements 90, such as electrical connector elements, may be used to connect the one or more heater elements 74 and the thermocouples 96 to the one or more controllers 85.

As shown in FIG. 10, the method 270 further comprises the step of aligning 274 a first thermoplastic composite part 24a (see FIGS. 1, 2F) to the first heater assembly 50. As further shown in FIG. 10, the method 270 further comprises the step of aligning 276 a second thermoplastic composite part 24b (see FIGS. 1, 2F) to the second heater assembly 52.

The first thermoplastic composite part 24a may be aligned to the first heater assembly 50, such as the lower heater assembly 50a, with tabs (not shown), visual features (not shown), or another suitable visual device or mechanism, coupled to either the first thermoplastic composite part 24a or to the first heater assembly 50. Similarly, the second thermoplastic composite part 24b may be aligned to the second heater assembly 52, such as the upper heater assembly 52a, with tabs (not shown), visual features (not shown), or another suitable visual device or mechanism, coupled to either the second thermoplastic composite part 24b or to the second heater assembly 52.

The step of aligning 254 the first thermoplastic composite part 24a to the first heater assembly 50, such as the lower heater assembly 50a, and the step of aligning 256 the second thermoplastic composite part 24b to the second heater assembly 52, such as the upper heater assembly 52a, may further comprise, aligning the first thermoplastic composite part 24a and aligning the second thermoplastic composite part 24b, each comprising one of, as shown in FIG. 1, a thermoplastic composite laminate 38, a coupon 40, a workpiece 42, a thermoplastic composite aircraft part 44, or another suitable thermoplastic composite part 24. As shown in FIG. 1, the thermoplastic composite aircraft part 44 may comprise one or more of an aircraft passenger door surround part 44a, a bracket 44b, a clip 44c, a fitting 44d, a panel 44e, a frame 44f, an intercostal 44g, a floor beam 44h, or another suitable thermoplastic composite aircraft part 44. The thermoplastic composite parts 24 may also comprise brackets, clips, fittings, frames, beams, and other parts or components to be welded together and used in spacecraft, rotorcraft, automobiles, watercraft, and other vehicles and structures.

As shown in FIG. 10, the method 270 further comprises the step of supplying 278 air 212a (see FIGS. 2A-2B) from an air supply 212 (see FIGS. 2A-2B) to the air pressure assembly 18 (see FIGS. 2A-2B). As shown in FIG. 10, the method 270 further comprises the step of applying 280 the force 106, by the linear pneumatic actuator assembly 172 of the air pressure assembly 18, on a weldline 28a (see FIGS. 1, 9A) comprising contact interfaces 26 (see FIGS. 1, 9A) of the first thermoplastic composite part 24a (see FIGS. 1, 9A) and the second thermoplastic composite part 24b (see FIGS. 1, 9A). As shown in FIG. 10, the method 270 further comprises the step of activating 282 the one or more first heater elements 88 (see FIGS. 2A-2B) of the first heater assembly 50, and activating the one or more second heater elements 95 (see FIGS. 2A-2B) of the second heater assembly 52.

As shown in FIG. 10, the method 270 further comprises the step of running 284 a thermal welding cycle 75 (see FIG. 1), and applying heat 30 (see FIG. 1) from the one or more first heater elements 88 of the first heater assembly 50 and the one or more second heater elements 95 of the second heater assembly 52, at the weldline 28a, to melt thermoplastic composite material 25 (see FIG. 1), or thermoplastic composite materials 25, of the first thermoplastic composite part 24a and the second thermoplastic composite part 24b together at the weldline 28a, to obtain welded thermoplastic composite parts 24c (see FIGS. 1, 9A-9B). The step of running 284 the thermal welding cycle 75 (see FIG. 1) and applying the heat 30 (see FIG. 1) further comprises, running the thermal welding cycle 75 and applying the heat 30 at the weldline 28a, or bondline 28b, at a temperature 36 (see FIG. 1) in a range of from 260° C (two-hundred sixty degrees Celsius) to 375° C (three-hundred seventy-five degrees Celsius) (500 ° F (five-hundred degrees Fahrenheit) to 707° F (seven-hundred seven degrees Fahrenheit)), and applying the force 106 by the linear pneumatic actuator assembly 172 (see FIGS. 1, 2A-2B, 6) on the weldline 28a, or bondline 28b, at a pressure 32 (see FIG. 1) in a range of from 10 psi (ten pounds per square inch) to 60 psi (sixty pounds per square inch).

As shown in FIG. 10, the method 270 further comprises the step of cooling 286 the welded thermoplastic composite parts 24c. As shown in FIG. 10, the method 270 further comprises the step of removing 288 the air 212a from the air pressure assembly 18, to relieve a pressure 32 (see FIG. 1) and to relieve the force 106 (see FIG. 1) from the weldline 28a. As shown in FIG. 10, the method 270 further comprises the step of removing 290 the welded thermoplastic composite parts 24c that have cooled from the portable conduction welding apparatus 10.

The method 270 may further comprise after the step of removing 290 (see FIG. 10) the welded thermoplastic composite parts 24c that have cooled from the portable conduction welding apparatus 10, the step of securing the portable conduction welding apparatus 10 comprising a portable conduction welding tool 10a within a carrying case 14 (see FIGS. 1, 8) that is handheld, such as a suitcase 14a (see FIGS. 1, 8), and transporting the portable conduction welding apparatus 10 within the carrying case 14, for example, transporting the portable conduction welding apparatus 10 within the carrying case 14 to another location to perform thermoplastic welding 20, such as conduction welding 22, of other thermoplastic composite parts 24. Alternatively, the carrying case 14 may comprise a wheeled carrying case 14b (see FIG. 1), a briefcase 14c (see FIG. 1), a backpack 14d (see FIG. 1), a duffel bag 14e (see FIG. 1), or another suitable carrying case.

Preferably, the portable conduction welding apparatus 10 is a portable conduction welding tool 10a (see FIG. 2A) and is a compact portable conduction welding apparatus 10b (see FIG. 8) designed to be secured and transported in the carrying case 14 (see FIGS. 1, 8). Preferably, the carrying case 14 is handheld.

The total time to align the thermoplastic composite parts 24, warm the heater assemblies 48, run the thermal welding cycle 75 (see FIG. 1) to apply pressure 32 and heat 30 to the thermoplastic composite parts 24 to obtain welded thermoplastic composite parts 24c, and cool the welded thermoplastic composite parts 24c, may be 15 (fifteen) minutes to 120 (one-hundred twenty) minutes long. However, the total time may vary depending on the size of the thermoplastic composite parts 24 to be welded and the time to heat and cool the thermoplastic composite parts 24.

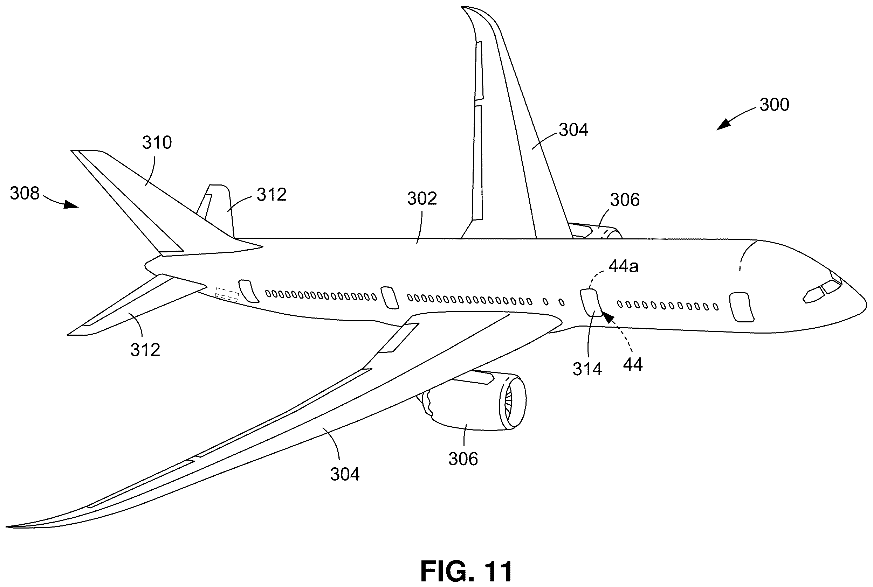

Now referring to FIG. 11, FIG. 11 is an illustration of a perspective view of an aircraft 300 that incorporates thermoplastic composite aircraft parts 44, such as aircraft passenger door surround parts 44a, that can be welded together using an exemplary version of the portable conduction welding apparatus 10 (see FIGS. 1-2F) and the method 270 (see FIG. 10) of the disclosure. As shown in FIG. 11, the aircraft 300 comprises a fuselage 302, wings 304, engines 306, and a tail 308. As shown in FIG. 11, the tail 308 comprises a vertical stabilizer 310 and horizontal stabilizers 312. FIG. 11 further shows an aircraft passenger door 314 having thermoplastic composite aircraft parts 44, such as aircraft passenger door surround parts 44a, in the interior of the aircraft passenger door 314 that can undergo thermoplastic welding 20 (see FIG. 1), such as conduction welding 22 (see FIG. 1), using the portable conduction welding apparatus 10 (see FIGS. 1-2F) and the method 270 (see FIG. 10) disclosed herein.

Although the aircraft 300 shown in FIG. 11 is generally representative of a commercial passenger aircraft having one or more thermoplastic composite aircraft parts 44, the teachings of the disclosed versions of the portable conduction welding apparatus 10 (see FIGS. 1-2F) and the method 270 (see FIG. 10) may be applied to other passenger aircraft.

Moreover, the teachings of the disclosed versions of the portable conduction welding apparatus 10 (see FIGS. 1-2F) and the method 270 (see FIG. 10) may be applied to thermoplastic composite parts 24 (see FIG. 1) that can be welded for cargo aircraft, military aircraft, rotorcraft, and other types of aircraft or aerial vehicles, as well as aerospace vehicles, spacecraft, satellites, space launch vehicles, rockets, and other aerospace vehicles. Further, the teachings of the disclosed versions of the portable conduction welding apparatus 10 (see FIGS. 1-2F) and the method 270 (see FIG. 10) thermoplastic composite parts 24 (see FIG. 1) that can be welded for watercraft, automobiles, trains, architectural structures, or other suitable vehicles or structures.

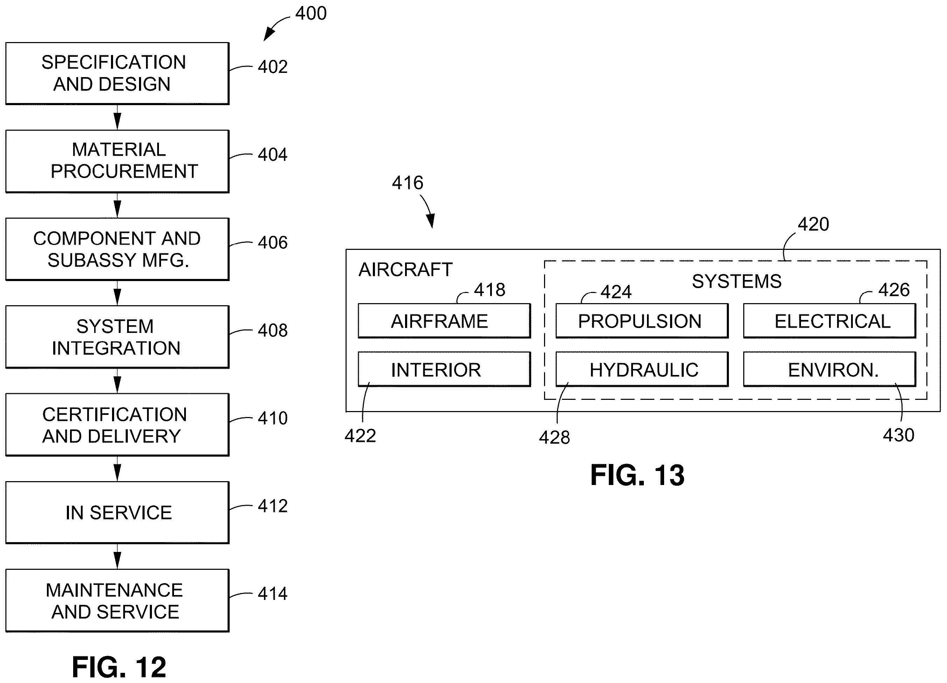

Now referring to FIGS. 12 and 13, FIG. 12 is an illustration of a flow diagram of an exemplary aircraft manufacturing and service method 400, and FIG. 13 is an illustration of an exemplary block diagram of an aircraft 416. Referring to FIGS. 12 and 13, versions of the disclosure may be described in the context of the aircraft manufacturing and service method 400 as shown in FIG. 12, and the aircraft 416 as shown in FIG. 13.

During pre-production, exemplary aircraft manufacturing and service method 400 may include specification and design 402 of the aircraft 416 and material procurement 404. During manufacturing, component and subassembly manufacturing 406 and system integration 408 of the aircraft 416 takes place. Thereafter, the aircraft 416 may go through certification and delivery 410 in order to be placed in service 412. While in service 412 by a customer, the aircraft 416 may be scheduled for routine maintenance and service 414 (which may also include modification, reconfiguration, refurbishment, and other suitable services).

Each of the processes of the aircraft manufacturing and service method 400 may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 13, the aircraft 416 produced by the exemplary aircraft manufacturing and service method 400 may include an airframe 418 with a plurality of systems 420 and an interior 422. Examples of the plurality of systems 420 may include one or more of a propulsion system 424, an electrical system 426, a hydraulic system 428, and an environmental system 430. Any number of other systems may be included. Although an aerospace example is shown, the principles of the disclosure may be applied to other industries, such as automotive.

Methods and systems embodied herein may be employed during any one or more of the stages of the aircraft manufacturing and service method 400. For example, components or subassemblies corresponding to component and subassembly manufacturing 406 may be fabricated or manufactured in a manner similar to components or subassemblies produced while the aircraft 416 is in service 412. Also, one or more apparatus embodiments, method embodiments, or a combination thereof, may be utilized during component and subassembly manufacturing 406 and system integration 408, for example, by substantially expediting assembly of or reducing the cost of the aircraft 416. Similarly, one or more of apparatus embodiments, method embodiments, or a combination thereof, may be utilized while the aircraft 416 is in service 412, for example and without limitation, to maintenance and service 414.

Disclosed versions of the portable conduction welding apparatus 10 (see FIGS. 1, 2A-2F), the portable conduction welding system 12 (see FIGS. 1, 8), and the method 270 (see FIG. 10) provide an improved portable conduction welding tool 10a (see FIGS. 1, 2A-2F) and an improved welding process 23 (see FIG. 1) for thermoplastic welding 20 (see FIG. 1), such as conduction welding 22 (see FIG. 1), of thermoplastic composite parts 24, such as thermoplastic composite aircraft parts 44 (see FIGS. 1, 9A, 11), where the portable conduction welding apparatus 10, such as the portable conduction welding tool 10a, is handheld, lightweight, and easy to carry, and is easily portable for transport to, and use at, multiple locations, including a manufacturing facility, and on an aircraft or on other vehicles. The portable conduction welding apparatus 10, such as the portable conduction welding tool 10a, is preferably under 35 (thirty-five) pounds in weight and is preferably under the one-man weight lift limit of under 35 (thirty-five) pounds.

In addition, the portable conduction welding apparatus 10, such as the portable conduction welding tool 10a, can be secured and transported in a carrying case 14 (see FIGS. 1,8), such as a suitcase 14a (see FIG. 1, 8), a wheeled carrying case 14b (see FIG. 1), a briefcase 14c (see FIG. 1), a backpack 14d (see FIG. 1), a duffel bag 14e (see FIG. 1), or another suitable carrying case 14. The portable conduction welding apparatus 10, such as the portable conduction welding tool 10a, can be used to join thermoplastic composite parts 24 anywhere, including on an aircraft 300 (see FIG. 11). The portable conduction welding apparatus 10 has the advantages of portability, usability, and adaptability over known apparatuses, systems, and methods.

Further, disclosed versions of the portable conduction welding apparatus 10 (see FIGS. 1, 2A-2F), the portable conduction welding system 12 (see FIGS. 1, 8), and the method 270 (see FIG. 8) are usable on multiple thermoplastic composite part 24 configurations, are simple and easy to use and do not require complex digital controls and software programming or robotics to pre-plan the pathway of a robot or large equipment, and do not require special facility modifications, such as power or air supplies, to use. The portable conduction welding apparatus 10 is less complex to use and less expensive than known robotics and large equipment, such as jigs and large heated platens. The portable conduction welding apparatus 10, such as the portable conduction welding tool 10a, is able to function with standard power inputs, for example, 120 V (one-hundred twenty Volt) electrical power, and 110 psi (one-hundred ten pounds per square inch) shop air, such as pressurized or compressed air.

A novel feature of the portable conduction welding apparatus 10, such as the portable conduction welding tool 10a, includes rigidly attaching the machined insulation plates 56 (see FIGS. 2A, 5A), such as the first machined insulation plates 60 (see FIGS. 2A, 5A), preferably made of a ceramic material 70 (see FIG. 1), to the machined heater block 58 (see FIGS. 2A, 5A-5B), such as the first machined heater block 64 (see FIGS. 5A-5B), and rigidly attaching the machined insulation plates 56 (see FIGS. 2A, 3, 4A), such as the second machined insulation plates 66 (see FIGS. 2A, 3, 4A), preferably made of a ceramic material 70 (see FIG. 1), to the machined heater block 58 (see FIGS. 2A, 3, 4A-4B), such as the second machined heater block 68 (see FIGS. 3, 4A-4B), instead of using machined ceramic tubs to hold, and not attach, to the machined heater blocks. Another novel feature of the portable conduction welding apparatus 10, such as the portable conduction welding tool 10a, includes the second heater assembly 52 (see FIGS. 2A-2B), such as the upper heater assembly 52a (see FIGS. 2A-2B), is rigidly attached to the linear pneumatic actuator assembly 174 instead of being free floating, and the first heater assembly 50 (see FIGS. 2A-2B), such as the lower heater assembly 50b (see FIGS. 2A-2B), is rigidly attached to the bottom heater angle portions 156b (see FIGS. 2A-2B), instead of being free floating. Thus, the first heater assembly 50, such as the lower heater assembly 50a, and the second heater assembly 52, such as the upper heater assembly 52a, do not need to be indexed or aligned with indexing pins or other indexing mechanisms.

Another novel feature of the portable conduction welding apparatus 10, such as the portable conduction welding tool 10a, includes a smaller overall profile of the portable conduction welding apparatus 10, and the first heater assembly 50 (see FIGS. 2A-2B), such as the lower heater assembly 50b (see FIGS. 2A-2B), being lightweight with a small number of parts.

Another novel feature of the portable conduction welding apparatus 10, such as the portable conduction welding tool 10a, includes a portable conduction welding apparatus 10 that has a fully pneumatic pressure control and application, instead of having to use a hand-tightening off-the-shelf clamp combined with a load cell.

Another novel feature of the portable conduction welding apparatus 10, such as the portable conduction welding tool 10a, includes the use, in preferred versions, of a silicon pressure pad 134 (see FIGS. 2A-2B, 3), such as a high temperature silicone pressure pad 134a (see FIG. 3), that enables equipment conformability for even pressure to the thermoplastic composite parts 24.

Another novel feature of the portable conduction welding apparatus 10, such as the portable conduction welding tool 10a, includes application of force 106 (see FIGS. 1, 2F) and load to both the upper machined heater block 68a (see FIGS. 4A-4B) and the lower machined heater block 64a (see FIGS. 5A-5B) over a large surface area 164a (see FIG. 6), instead of indexing pins or attachment elements positioned through each machined heater block. With the portable conducting welding apparatus 10 disclosed herein, the force 106 (see FIG. 1) and load is not being transferred through any indexing pins or attachment pins or attachment elements to the machined heater blocks. Instead, the force (F) 106 (see FIG. 2F) and the load is being transferred from the linear pneumatic actuator assembly 172 (see FIG. 2F), through the flat, large surface area of the air cylinder isolator plate 124 (see FIG. 2F), through the silicone pressure pad 134 (see FIG. 2F), through the dovetail connector plate 102 (see FIG. 2F), and is transferred across the surface area 164 (see FIG. 2G) of the dovetail connector plate 102, and through the second machined heater block 68 (see FIG. 2F), such as the upper machined heater block 68a (see FIG. 4A), through the thermoplastic composite parts 24 (see FIG. 2F) being welded together, through the first machined heater block 64 (see FIG. 2F), such as the lower machined heater block 64a (see FIG. 5A), and across the surface area 164 (see FIG. 2G) of the spacer plate 162 (see FIG. 2F), such as the bottom spacer plate 162a (see FIG. 2G).

Many modifications and other versions of the disclosure will come to mind to one skilled in the art to which this disclosure pertains having the benefit of the teachings presented in the foregoing descriptions and the associated drawings. The versions described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

The description includes the following clauses:
1. A portable conduction welding apparatus for conduction welding of thermoplastic composite parts, the portable conduction welding apparatus comprising:
   a support frame assembly having a lower portion and an upper portion;
   an air pressure assembly configured to apply a force during the conduction welding, the air pressure assembly comprising:
      a linear pneumatic actuator assembly coupled to the upper portion of the support frame assembly;
      a directional air valve assembly; and
      an air regulator assembly;
   a heating system comprising:
   a first heater assembly coupled to the lower portion of the support frame assembly, the first heater assembly comprising:
   a plurality of first machined insulation plates;
   a first machined heater block attached to the plurality of first machined insulation plates;
   one or more first heater elements coupled to the first machined heater block; and
   one or more first thermocouples coupled to the first machined heater block; and
   a second heater assembly positioned opposite the first heater assembly, and coupled to the linear pneumatic actuator assembly, the second heater assembly comprising:
      a plurality of second machined insulation plates;
      a second machined heater block attached to the plurality of second machined insulation plates;
      a dovetail connector plate attached to one or more of the plurality of second machined insulation plates;
      an air cylinder isolator plate coupled to the dovetail connector plate;
      one or more second heater elements coupled to the second machined heater block; and one or more second thermocouples coupled to the second machined heater block; and
      one or more controllers having one or more power supplies, to control and to power the portable conduction welding apparatus,
      wherein the portable conduction welding apparatus is portable and is configured to weld together at a weldline, a first thermoplastic composite part aligned to the first heater assembly and a second thermoplastic composite part aligned to the second heater assembly, by applying the force from the air pressure assembly on the weldline, and conducting heat from the one or more first heater elements and the one or more second heater elements at the weldline during a thermal welding cycle of the conduction welding, to melt thermoplastic composite material of the first thermoplastic composite part and the second thermoplastic composite part at the weldline, to obtain welded thermoplastic composite parts.
2. The portable conduction welding apparatus of clause 1, wherein the support frame assembly further comprises:
   a support frame plate having a lower end and an upper end;
   a plurality of support angle portions attached to the lower end of the support frame plate;
   a spacer plate attached to at least two of the plurality of support angle portions; and
   an actuator mating plate attached to the upper end of the support frame plate.
3. The portable conduction welding apparatus of clause 2, wherein the support frame plate comprises a C-shaped support frame plate having a plurality of cut-out openings formed through a body of the C-shaped support frame plate.
4. The portable conduction welding apparatus of any preceding clause, wherein the air pressure assembly further comprises a plurality of air hose lines comprising:
   a first air hose line an air supply of air to the air regulator assembly;
   a second air hose line connecting the air regulator assembly to the directional air valve assembly;
   a third air hose line connecting the directional air valve assembly to an air flow inlet port of the linear pneumatic actuator assembly; and
   a fourth air hose line connecting the directional air valve assembly to another air flow inlet port of the linear pneumatic actuator assembly.
5. The portable conduction welding apparatus of any preceding clause, wherein the linear pneumatic actuator assembly comprises:
   a housing with mounting brackets attached to the support frame assembly;
   a plurality of guide members coupled to an interior of the housing;
   a linear pneumatic actuator coupled to the plurality of guide members; and
   a plurality of air flow ports coupled to the housing, and configured to engage and disengage the linear pneumatic actuator.
6. The portable conduction welding apparatus of any preceding clause, wherein the directional air valve assembly is configured to control an air flow to the linear pneumatic actuator assembly, the directional air valve assembly comprising:
   a directional air valve;
   a plurality of mufflers attached to the directional air valve and configured to attenuate sound emanating from the directional air valve; and
   a plurality of elbow fittings attached to the directional air valve.
7. The portable conduction welding apparatus of any preceding clause, wherein the air regulator assembly comprises:
   an air regulator;
   a pressure gauge attached to the air regulator;
   an air regulator angle portion attaching the air regulator assembly to the lower portion of the support frame assembly;
   a quick-disconnect coupling attached to the air regulator; and
   one or more elbow fittings attached to the air regulator.
8. The portable conduction welding apparatus of any preceding clause, wherein
   the plurality of first machined insulation plates and the plurality of second machined insulation plates are made of a ceramic material; and
   the first machined heater block and the second machined heater block are made of a metal material comprising one or more of stainless steel, steel, aluminum, carbon steel, and aluminum bronze.
9. The portable conduction welding apparatus of any preceding clause, wherein the second heater assembly further comprises a silicone pressure pad coupled between the dovetail connector plate and the air cylinder isolator plate.
10. The portable conduction welding apparatus of any preceding clause, wherein the portable conduction welding apparatus is a portable conduction welding tool designed to be secured and transported in a carrying case that is handheld, the carrying case comprising a suitcase, a wheeled carrying case, a briefcase, a backpack, or a duffel bag.
11. A portable conduction welding system for conduction welding of thermoplastic composite parts, the portable conduction welding system comprising:
   a portable conduction welding apparatus for the conduction welding of the thermoplastic composite parts, the portable conduction welding apparatus comprising:
   a support frame assembly having a lower portion and an upper portion;
   an air pressure assembly configured to apply a force during the conduction welding, the air pressure assembly comprising:
      a linear pneumatic actuator assembly coupled to the upper portion of the support frame assembly;
      a directional air valve assembly;
      an air regulator assembly; and
      a plurality of air hose lines;
   a heating system comprising:
   a first heater assembly coupled to the lower portion of the support frame assembly, the first heater assembly comprising:
   a plurality of first machined insulation plates;
   a first machined heater block attached to the plurality of first machined insulation plates;
   one or more first heater elements coupled to the first machined heater block; and
   one or more first thermocouples coupled to the first machined heater block; and
   a second heater assembly positioned opposite the first heater assembly, and coupled to the linear pneumatic actuator assembly, the second heater assembly comprising:
      a plurality of second machined insulation plates;
      a second machined heater block attached to the plurality of second machined insulation plates;
      a dovetail connector plate attached to one or more of the plurality of second machined insulation plates;
      a silicone pressure pad coupled to the dovetail connector plate;
      an air cylinder isolator plate coupled to the silicone pressure pad;
      one or more second heater elements coupled to the second machined heater block;
         and
   one or more second thermocouples coupled to the second machined heater block; and
      one or more controllers having one or more power supplies, to control and to power the portable conduction welding apparatus; and
      a carrying case configured to secure and to transport the portable conduction welding apparatus,
      wherein the portable conduction welding apparatus is portable and is configured to weld together at a weldline, a first thermoplastic composite part aligned to the first heater assembly and a second thermoplastic composite part aligned to the second heater assembly, by applying the force from the air pressure assembly on the weldline, and conducting heat from the one or more first heater elements and the one or more second heater elements at the weldline during a thermal welding cycle of the conduction welding, to melt thermoplastic composite material of the first thermoplastic composite part and the second thermoplastic composite part at the weldline, to obtain welded thermoplastic composite parts.
11A. A portable conduction welding system for conduction welding of thermoplastic composite parts, the portable conduction welding system comprising:
   the portable conduction welding apparatus of any of clauses 1 to 10;
   a carrying case configured to secure and to transport the portable conduction welding apparatus.
12. The portable conduction welding system of clause 11 or clause 11A, wherein the support frame assembly of the portable conduction welding apparatus further comprises:
   a support frame plate having a lower end and an upper end;
   a plurality of support angle portions attached to the lower end of the support frame plate;
   a spacer plate attached to at least two of the plurality of support angle portions; and
   an actuator mating plate attached to the upper end of the support frame plate.
13. The portable conduction welding system of any of clause 11 to 12, wherein the linear pneumatic actuator assembly comprises:
   a housing with mounting brackets attached to the support frame assembly;
   a plurality of guide members coupled to an interior of the housing;
   a linear pneumatic actuator coupled to the plurality of guide members; and
   a plurality of air flow ports coupled to the housing, and configured to engage and disengage the linear pneumatic actuator.
14. The portable conduction welding apparatus of any of clauses 11 to 13, wherein the portable conduction welding apparatus is a portable conduction welding tool designed to be secured and transported in a carrying case that is handheld, the carrying case comprising a suitcase, a wheeled carrying case, a briefcase, a backpack, or a duffel bag.
15. A method of using a portable conduction welding apparatus for conduction welding of thermoplastic composite parts, the method comprising:
   providing the portable conduction welding apparatus comprising:
   a support frame assembly having a lower portion and an upper portion;
   an air pressure assembly configured to apply a force during the conduction welding, the air pressure assembly comprising:
      a linear pneumatic actuator assembly coupled to the upper portion of the support frame assembly;
      a directional air valve assembly; and
      an air regulator assembly;
   a heating system comprising:
   a first heater assembly coupled to the lower portion of the support frame assembly, the first heater assembly comprising:
   a plurality of first machined insulation plates;
   a first machined heater block attached to the plurality of first machined insulation plates;
   one or more first heater elements coupled to the first machined heater block; and
   one or more first thermocouples coupled to the first machined heater block; and
   a second heater assembly positioned opposite the first heater assembly, and coupled to the linear pneumatic actuator assembly, the second heater assembly comprising:
      a plurality of second machined insulation plates;
      a second machined heater block attached to the plurality of second machined insulation plates;
      a dovetail connector plate attached to one or more of the plurality of second machined insulation plates;
      a silicone pressure pad coupled to the dovetail connector plate;
      an air cylinder isolator plate coupled to the silicone pressure pad;
      one or more second heater elements coupled to the second machined heater block; and
   one or more second thermocouples coupled to the second machined heater block; and
      one or more controllers having one or more power supplies, to control and to power the portable conduction welding apparatus;
      aligning a first thermoplastic composite part to the first heater assembly;
      aligning a second thermoplastic composite part to the second heater assembly;
      supplying air from an air supply to the air pressure assembly;
      applying the force, by the linear pneumatic actuator assembly of the air pressure assembly, on a weldline comprising contact interfaces of the first thermoplastic composite part and the second thermoplastic composite part;
      activating the one or more first heater elements of the first heater assembly, and activating the one or more second heater elements of the second heater assembly;
      running a thermal welding cycle, and applying heat from the one or more first heater elements of the first heater assembly and the one or more second heater elements of the second heater assembly, at the weldline, to melt thermoplastic composite material of the first thermoplastic composite part and the second thermoplastic composite part together at the weldline, to obtain welded thermoplastic composite parts;
      cooling the welded thermoplastic composite parts; and
      removing the air from the air pressure assembly, to relieve a pressure and to relieve the force from the weldline; and
      removing the welded thermoplastic composite parts that are cooled from the portable conduction welding apparatus.
16. The method of clause 15, further comprising, after removing the welded thermoplastic composite parts from the portable conduction welding apparatus, securing the portable conduction welding apparatus within a carrying case, and transporting the portable conduction welding apparatus within the carrying case.
17. The method of clause 15 or clause 16, wherein providing the portable conduction welding apparatus further comprises providing the portable conduction welding apparatus wherein the support frame assembly further comprises:
   a support frame plate having a lower end and an upper end;
   a plurality of support angle portions attached to the lower end of the support frame plate;
   a spacer plate attached to at least two of the plurality of support angle portions; and
   an actuator mating plate attached to the upper end of the support frame plate.
18. The method of any of clauses 15 to 17, wherein providing the portable conduction welding apparatus further comprises providing the portable conduction welding apparatus wherein the linear pneumatic actuator assembly comprises:
   a housing with mounting brackets attached to the support frame assembly;
   a plurality of guide members coupled to an interior of the housing;
   a linear pneumatic actuator coupled to the plurality of guide members; and
   a plurality of air flow ports coupled to the housing, and configured to engage and disengage the linear pneumatic actuator.
19. The method of any of clauses 15 to 18, wherein aligning the first thermoplastic composite part to the first heater assembly, and aligning the second thermoplastic composite part to the second heater assembly, further comprise aligning the first thermoplastic composite part and aligning the second thermoplastic composite part, each comprising one of a thermoplastic composite laminate, a coupon, a workpiece, a thermoplastic composite aircraft part, an aircraft passenger door surround part, a bracket, a clip, a fitting, panel, a frame, an intercostal, or a floor beam.
20. The method of any of clauses 15 to 19, wherein running the thermal welding cycle and applying the heat further comprises, running the thermal welding cycle and applying the heat at the weldline at a temperature in a range of from 260 degrees Celsius to 375 degrees Celsius, and applying the force by the linear pneumatic actuator assembly on the weldline at a pressure in a range of from 10 pounds per square inch to 60 pounds per square inch.
21. The method of any of clauses 15 to 20, wherein the portable conduction welding apparatus comprises the portable conduction welding apparatus of any of clauses 1 to 10 and/or the portable conduction welding system of any of clauses 11 to 14.

## Claims

1. A portable conduction welding apparatus (10) for conduction welding (22) of thermoplastic composite parts (24), the portable conduction welding apparatus (10) comprising:
a support frame assembly (16) having a lower portion (140a) and an upper portion (140b);
an air pressure assembly (18) configured to apply a force (106) during the conduction welding (22), the air pressure assembly (18) comprising:
a linear pneumatic actuator assembly (172) coupled to the upper portion (140b) of the support frame assembly (16);
a directional air valve assembly (194); and
an air regulator assembly (204);
a heating system (46) comprising:
a first heater assembly (50) coupled to the lower portion (140a) of the support frame assembly (16), the first heater assembly (50) comprising:
a plurality of first machined insulation plates (60);
a first machined heater block (64) attached to the plurality of first machined insulation plates (60);
one or more first heater elements (88) coupled to the first machined heater block (64); and
one or more first thermocouples (98) coupled to the first machined heater block (64); and
a second heater assembly (52) positioned opposite the first heater assembly (50), and coupled to the linear pneumatic actuator assembly (172), the second heater assembly (52) comprising:
a plurality of second machined insulation plates (66);
a second machined heater block (68) attached to the plurality of second machined insulation plates (66);
a dovetail connector plate (102) attached to one or more of the plurality of second machined insulation plates (66);
an air cylinder isolator plate (124) coupled to the dovetail connector plate (102);
one or more second heater elements (95) coupled to the second machined heater block (68); and
one or more second thermocouples (100) coupled to the second machined heater block (68); and
one or more controllers (85) having one or more power supplies (86), to control and to power the portable conduction welding apparatus (10),
wherein the portable conduction welding apparatus (10) is portable and is configured to weld together at a weldline (28a), a first thermoplastic composite part (24a) aligned to the first heater assembly (50) and a second thermoplastic composite part (24b) aligned to the second heater assembly (52), by applying the force (106) from the air pressure assembly (18) on the weldline (28a), and conducting heat (30) from the one or more first heater elements (88) and the one or more second heater elements (95) at the weldline (28a) during a thermal welding cycle (75) of the conduction welding (22), to melt thermoplastic composite material (25) of the first thermoplastic composite part (24a) and the second thermoplastic composite part (24b) at the weldline (28a), to obtain welded thermoplastic composite parts (24c).

2. The portable conduction welding apparatus (10) of claim 1, wherein the support frame assembly (16) further comprises:
a support frame plate (142) having a lower end (144a) and an upper end (144b);
a plurality of support angle portions (156) attached to the lower end (144a) of the support frame plate (142);
a spacer plate (162) attached to at least two of the plurality of support angle portions (156); and
an actuator mating plate (168) attached to the upper end (144b) of the support frame plate (142).

3. The portable conduction welding apparatus (10) of claim 2, wherein the support frame plate (142) comprises a C-shaped support frame plate (142a) having a plurality of cut-out openings (148) formed through a body (146) of the C-shaped support frame plate (142a).

4. The portable conduction welding apparatus (10) of any of claims 1 to 3, wherein the air pressure assembly (18) further comprises a plurality of air hose lines (196) comprising:
a first air hose line (196a) an air supply (212) of air (212a) to the air regulator assembly (204);
a second air hose line (196b) connecting the air regulator assembly (204) to the directional air valve assembly (194);
a third air hose line (196c) connecting the directional air valve assembly (194), to an air flow inlet port (190a) of the linear pneumatic actuator assembly (172); and
a fourth air hose line (196d) connecting the directional air valve assembly (194), to another air flow inlet port (190b) of the linear pneumatic actuator assembly (172).

5. The portable conduction welding apparatus (10) of any of claims 1 to 4, wherein the linear pneumatic actuator assembly (172) comprises:
a housing (174) with mounting brackets (180) attached to the support frame assembly (16);
a plurality of guide members (186) coupled to an interior (176a) of the housing (174);
a linear pneumatic actuator (182) coupled to the plurality of guide members (186); and
a plurality of air flow ports (190) coupled to the housing (174), and configured to engage and disengage the linear pneumatic actuator (182).

6. The portable conduction welding apparatus (10) of any of claims 1 to 5, wherein the directional air valve assembly (194) is configured to control an air flow (192) to the linear pneumatic actuator assembly (172), the directional air valve assembly (194) comprising:
a directional air valve (198);
a plurality of mufflers (200) attached to the directional air valve (198) and configured to attenuate sound emanating from the directional air valve (198); and
a plurality of elbow fittings (202) attached to the directional air valve (198).

7. The portable conduction welding apparatus (10) of any of claims 1 to 6, wherein the air regulator assembly (204) comprises:
an air regulator (206);
a pressure gauge (207) attached to the air regulator (206);
an air regulator angle portion (156c) attaching the air regulator assembly (204) to the lower portion (140a) of the support frame assembly (16);
a quick disconnect coupling (208) attached to the air regulator (206); and
one or more elbow fittings (202) attached to the air regulator (206).

8. The portable conduction welding apparatus (10) of any of claims 1 to 7, wherein
the plurality of first machined insulation plates (60) and the plurality of second machined insulation plates (66) are made of a ceramic material (70); and
the first machined heater block (64) and the second machined heater block (68) are made of a metal material (72) comprising one or more of stainless steel (72a), steel (72b), aluminum (72c), carbon steel (72d), and aluminum bronze (72e).

9. The portable conduction welding apparatus (10) of any of claims 1 to 8, wherein the second heater assembly (52) further comprises a silicone pressure pad (134) coupled between the dovetail connector plate (102) and the air cylinder isolator plate (124).

10. The portable conduction welding apparatus (10) of any of claims 1 to 9, wherein the portable conduction welding apparatus (10) is a portable conduction welding tool (10a) designed to be secured and transported in a carrying case (14) that is handheld, the carrying case (14) comprising a suitcase (14a), a wheeled carrying case (14b), a briefcase (14c), a backpack (14d), or a duffel bag (14e).

11. A portable conduction welding system (12) for conduction welding (22) of thermoplastic composite parts (24), the portable conduction welding system (12) comprising:
a portable conduction welding apparatus (10) for the conduction welding (22) of the thermoplastic composite parts (24), the portable conduction welding apparatus (10) comprising:
a support frame assembly (16) having a lower portion (140a) and an upper portion (140b);
an air pressure assembly (18) configured to apply a force (106) during the conduction welding (22), the air pressure assembly (18) comprising:
a linear pneumatic actuator assembly (172) coupled to the upper portion (140b) of the support frame assembly (16);
a directional air valve assembly (194);
an air regulator assembly (204); and
a plurality of air hose lines (196);
a heating system (46) comprising:
a first heater assembly (50) coupled to the lower portion (140a) of the support frame assembly (16), the first heater assembly (50) comprising:
a plurality of first machined insulation plates (60);
a first machined heater block (64) attached to the plurality of first machined insulation plates (60);
one or more first heater elements (88) coupled to the first machined heater block (64); and
one or more first thermocouples (98) coupled to the first machined heater block (64); and
a second heater assembly (52) positioned opposite the first heater assembly (50), and coupled to the linear pneumatic actuator assembly (172), the second heater assembly (52) comprising:
a plurality of second machined insulation plates (66);
a second machined heater block (68) attached to the plurality of second machined insulation plates (66);
a dovetail connector plate (102) attached to one or more of the plurality of second machined insulation plates (66);
a silicone pressure pad (134) coupled to the dovetail connector plate (102);
an air cylinder isolator plate (124) coupled to the silicone pressure pad (134);
one or more second heater elements (95) coupled to the second machined heater block (68); and
one or more second thermocouples (100) coupled to the second machined heater block (68); and
one or more controllers (85) having one or more power supplies (86), to control and to power the portable conduction welding apparatus (10); and
a carrying case (14) configured to secure and to transport the portable conduction welding apparatus (10),
wherein the portable conduction welding apparatus (10) is portable and is configured to weld together at a weldline (28a), a first thermoplastic composite part (24a) aligned to the first heater assembly (50) and a second thermoplastic composite part (24b) aligned to the second heater assembly (52), by applying the force (106) from the air pressure assembly (18) on the weldline (28a), and conducting heat (30) from the one or more first heater elements (88) and the one or more second heater elements (95) at the weldline (28a) during a thermal welding cycle (75) of the conduction welding (22), to melt thermoplastic composite material (25) of the first thermoplastic composite part (24a) and the second thermoplastic composite part (24b) at the weldline (28a), to obtain welded thermoplastic composite parts (24c).

12. The portable conduction welding system (12) of claim 11, wherein the support frame assembly (16) of the portable conduction welding apparatus (10) further comprises:
a support frame plate (142) having a lower end (144a) and an upper end (144b);
a plurality of support angle portions (156) attached to the lower end (144a) of the support frame plate (142);
a spacer plate (162) attached to at least two of the plurality of support angle portions (156); and
an actuator mating plate (168) attached to the upper end (144b) of the support frame plate (142), and/or,
wherein the linear pneumatic actuator assembly (172) comprises:
a housing (174) with mounting brackets (180) attached to the support frame assembly (16);
a plurality of guide members (186) coupled to an interior (176a) of the housing (174);
a linear pneumatic actuator (182) coupled to the plurality of guide members (186); and
a plurality of air flow ports (190) coupled to the housing (174), and configured to engage and disengage the linear pneumatic actuator (182), and/or,
wherein the portable conduction welding apparatus (10) is a portable conduction welding tool (10a) designed to be secured and transported in a carrying case (14) that is handheld, the carrying case (14) comprising a suitcase (14a), a wheeled carrying case (14b), a briefcase (14c), a backpack (14d), or a duffel bag (14e).

13. A method (270) of using a portable conduction welding apparatus (10) for conduction welding (22) of thermoplastic composite parts (24), the method (270) comprising:
(272) providing the portable conduction welding apparatus (10) comprising:
a support frame assembly (16) having a lower portion (140a) and an upper portion (140b);
an air pressure assembly (18) configured to apply a force (106) during the conduction welding (22), the air pressure assembly (18) comprising:
a linear pneumatic actuator assembly (172) coupled to the upper portion (140b) of the support frame assembly (16);
a directional air valve assembly (194); and
an air regulator assembly (204);
a heating system (46) comprising:
a first heater assembly (50) coupled to the lower portion (140a) of the support frame assembly (16), the first heater assembly (50) comprising:
a plurality of first machined insulation plates (60);
a first machined heater block (64) attached to the plurality of first machined insulation plates (60);
one or more first heater elements (88) coupled to the first machined heater block (64); and
one or more first thermocouples (98) coupled to the first machined heater block (64); and
a second heater assembly (52) positioned opposite the first heater assembly (50), and coupled to the linear pneumatic actuator assembly (172), the second heater assembly (52) comprising:
a plurality of second machined insulation plates (66);
a second machined heater block (68) attached to the plurality of second machined insulation plates (66);
a dovetail connector plate (102) attached to one or more of the plurality of second machined insulation plates (66);
a silicone pressure pad (134) coupled to the dovetail connector plate (102);
an air cylinder isolator plate (124) coupled to the silicone pressure pad (134);
one or more second heater elements (95) coupled to the second machined heater block (68); and
one or more second thermocouples (100) coupled to the second machined heater block (68); and
one or more controllers (85) having one or more power supplies (86), to control and to power the portable conduction welding apparatus (10);
(274) aligning a first thermoplastic composite part (24a) to the first heater assembly (50);
(276) aligning a second thermoplastic composite part (24b) to the second heater assembly (52);
(278) supplying air (212a) from an air supply (212) to the air pressure assembly (18);
(280) applying the force (106), by the linear pneumatic actuator assembly (172) of the air pressure assembly (18), on a weldline (28a) comprising contact interfaces (26) of the first thermoplastic composite part (24a) and the second thermoplastic composite part (24b);
(282) activating the one or more first heater elements (88) of the first heater assembly (50), and activating the one or more second heater elements (95) of the second heater assembly (52);
(284) running a thermal welding cycle (75), and applying heat (30) from the one or more first heater elements (88) of the first heater assembly (50) and the one or more second heater elements (95) of the second heater assembly (52), at the weldline (28a), to melt thermoplastic composite material (25) of the first thermoplastic composite part (24a) and the second thermoplastic composite part (24b) together at the weldline (28a), to obtain welded thermoplastic composite parts (24c);
(286) cooling the welded thermoplastic composite parts (24c); and
(288) removing the air (212a) from the air pressure assembly (18), to relieve a pressure (32) and to relieve the force (106) from the weldline (28a); and
(290) removing the welded thermoplastic composite parts (24c) that are cooled from the portable conduction welding apparatus (10).

14. The method (270) of claim 13, further comprising, after removing (290) the welded thermoplastic composite parts (24c) from the portable conduction welding apparatus (10), securing the portable conduction welding apparatus (10) within a carrying case (14), and transporting the portable conduction welding apparatus (10) within the carrying case (14), and/or,
wherein providing (272) the portable conduction welding apparatus (10) further comprises providing the portable conduction welding apparatus (10) wherein the support frame assembly (16) further comprises:
a support frame plate (142) having a lower end (144a) and an upper end (144b);
a plurality of support angle portions (156) attached to the lower end (144a) of the support frame plate (142);
a spacer plate (162) attached to at least two of the plurality of support angle portions (156); and
an actuator mating plate (168) attached to the upper end (144b) of the support frame plate (142), and/or,
wherein providing (272) the portable conduction welding apparatus (10) further comprises providing the portable conduction welding apparatus (10) wherein the linear pneumatic actuator assembly (172) comprises:
a housing (174) with mounting brackets (180) attached to the support frame assembly (16);
a plurality of guide members (186) coupled to an interior (176a) of the housing (174);
a linear pneumatic actuator (182) coupled to the plurality of guide members (186); and
a plurality of air flow ports (190) coupled to the housing (174), and configured to engage and disengage the linear pneumatic actuator (182).

15. The method (270) of claim 13 or claim 14, wherein aligning (274) the first thermoplastic composite part (24a) to the first heater assembly (50), and aligning (276) the second thermoplastic composite part (24b) to the second heater assembly (52), further comprise aligning the first thermoplastic composite part (24a) and aligning the second thermoplastic composite part (24b), each comprising one of a thermoplastic composite laminate (38), a coupon (40), a workpiece (42), a thermoplastic composite aircraft part (44), an aircraft passenger door surround part (44a), a bracket (44b), a clip (44c), a fitting (44d), panel (44e), a frame (44f), an intercostal (44g), or a floor beam (44h), and/or,
wherein running (284) the thermal welding cycle (75) and applying the heat (30) further comprises, running the thermal welding cycle (75) and applying the heat (30) at the weldline (28a) at a temperature (36) in a range of from 260 degrees Celsius to 375 degrees Celsius, and applying the force (106) by the linear pneumatic actuator assembly (172) on the weldline (28a) at a pressure (32) in a range of from 10 pounds per square inch to 60 pounds per square inch.
